(19) Europäisches Patentamt / European Patent Office / Office européen des brevets

(11) **EP 2 140 401 B1**

(12) **FASCICULE DE BREVET EUROPEEN**

(45) Date de publication et mention de la délivrance du brevet:
**25.05.2011 Bulletin 2011/21**

(21) Numéro de dépôt: 08788209.8

(22) Date de dépôt: 21.04.2008

(51) Int Cl.:
**G06K 9/00** (2006.01)

(86) Numéro de dépôt international:
**PCT/FR2008/050710**

(87) Numéro de publication internationale:
**WO 2008/145920 (04.12.2008 Gazette 2008/49)**

(54) **PROCEDE DE COMPARAISON D'IMAGES, NOTAMMENT POUR LA RECONNAISSANCE PAR L'IRIS, METTANT EN OEUVRE AU MOINS UNE MESURE DE QUALITE DETERMINEE EN APPLIQUANT UN MODELE A APPRENTISSAGE STATISTIQUE**

VERFAHREN ZUM VERGLEICHEN VON BILDERN, INSBESONDERE ZUR IRISERKENNUNG MIT MINDESTENS EINER DURCH EIN STATISTISCHES LERNMODELL DEFINIERTEN QUALITÄTSMESSUNG

METHOD OF COMPARING IMAGES, NOTABLY FOR IRIS RECOGNITION, IMPLEMENTING AT LEAST ONE QUALITY MEASUREMENT DETERMINED BY APPLYING A STATISTICAL LEARNING MODEL

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.04.2007 FR 0754621**

(43) Date de publication de la demande:
**06.01.2010 Bulletin 2010/01**

(73) Titulaire: **Groupe Des Ecoles Des Telecommunications (GET) Institut National Des Telecommunications (INT) 91011 Evry Cédex (FR)**

(72) Inventeurs:
• **DORIZZI, Bernadette**
  **F-75015 Paris (FR)**
• **GARCIA-SALICETTI, Sonia**
  **F-75015 Paris (FR)**
• **KRICHEN, Emine**
  **F-92400 Courbevoie (FR)**

(74) Mandataire: **Esselin, Sophie et al Marks & Clerk France Conseils en Propriété Industrielle Immeuble " Visium " 22, avenue Aristide Briand 94117 Arcueil Cedex (FR)**

(56) Documents cités:
**US-A1- 2005 089 246     US-B1- 7 149 262**

• YI CHEN ET AL: "Localized Iris Image Quality Using 2-D Wavelets" ADVANCES IN BIOMETRICS LECTURE NOTES IN COMPUTER SCIENCE;; LNCS, SPRINGER-VERLAG, BE, vol. 3832, 2005, pages 373-381, XP019026902 ISBN: 3-540-31111-4
• DEXIN ZHANG ET AL: "Personal identification based on iris texture analysis" IEEE TRANSACTIONS ON PATTERN ANALYSIS AND MACHINE INTELLIGENCE, IEEE, NEW YORK, NY, US, vol. 25, no. 12, décembre 2003 (2003-12), pages 1519-1533, XP011103920 ISSN: 0162-8828

**Description**

La présente invention concerne notamment les procédés de comparaison d'images d'une biométrie entre au moins une image référence et au moins une image test dont on cherche à évaluer un degré de corrélation avec l'image référence.

L'invention s'applique plus particulièrement mais non exclusivement à la reconnaissance biométrique d'un individu, par exemple par acquisition d'une image de l'iris et comparaison de cette image avec une image précédemment acquise de l'iris de ce même individu.

La reconnaissance par l'iris est un moyen relativement fiable d'identifier un individu.

Le brevet US 4 141 349 divulgue un système de reconnaissance par l'iris sans donner les détails du traitement des données mis en oeuvre.

Le brevet US 5 291 560 divulgue un traitement consistant à segmenter l'iris et la pupille du reste de l'image de l'oeil, à normaliser la taille du disque de l'iris et à appliquer une démodulation de phase où la texture de l'iris est transformée par un filtrage par ondelettes de Gabor en un code binaire. La prise de décision concernant le degré de corrélation entre l'image test et l'image de référence est fondée sur un modèle probabiliste de Bernoulli.

Le brevet US 5 572 596 divulgue une méthode de segmentation de l'iris et de la pupille et une méthode de reconnaissance fondée sur une corrélation à différents niveaux de résolution.

Le brevet US 7 031 539 divulgue une méthode de reconnaissance fondée sur des filtres de Hilbert circulaires, en faisant l'hypothèse que la texture de l'iris varie dans le sens radial mais reste constante dans le sens angulaire.

La publication E. KRICHEN, L. ALLANO, S. GARCIA-SALICETTI et B. DORIZZI « Specific texture analysis for iris recognition » divulgue une méthode de reconnaissance par l'iris dans laquelle on prend en compte lors de la mesure de corrélation entre deux images les valeurs des pics de corrélation et leur position, indépendamment de la qualité de ces images.

La publication Yi Chen, Sarat C. Dass and Anil K. Jain "Localized Iris Image Quality Using 2-D Wavelets" divulgue un méthode de comparaison d'une image test avec une image référence, comportant les étapes consistent a :

a) generer a partir de l'image test une pluralité d'imagettes,
b) calculer pour chaque imagette une mesure de qualite associée a cette imagette et une grandeur representative de la correlation avec l'image référence,
c) calculer pour l'image test un score de comparaison avec l'image référence, ce score étant fonction de la correlation et de la mesures de qualite.

Les solutions existantes sont relativement satisfaisantes lorsque l'acquisition des images est faite en mode contraint avec une distance de la personne dont l'image de l'iris va être acquise à la caméra fixe ainsi qu'une volonté manifeste de cette personne de permettre l'acquisition de l'image.

Néanmoins, les performances des solutions existantes peuvent chuter lorsque les conditions d'acquisition sont moins bonnes et conduisent à des images dégradées, nécessitant ainsi d'effectuer des prétraitements sur les images.

Ainsi, malgré tous les développements proposés, il subsiste un besoin pour bénéficier d'un procédé et d'un système de comparaison d'images qui soit relativement performant et rapide et qui soit compatible, le cas échéant, avec une acquisition relativement brève de l'image biométrique de l'individu à reconnaître, donc relativement moins contraignante pour celui-ci.

La présente invention est definie dans les revendications 1, 17, 18 et 20.

Selon un de ses aspects, l'invention a pour objet un procédé de comparaison d'au moins une image test avec au moins une image référence, comportant les étapes consistant à :

a) générer à partir de l'image test une pluralité d'imagettes,
b) calculer pour chaque imagette :

- au moins une mesure de qualité associée à cette imagette, déterminée par un modèle à apprentissage statistique,
- au moins une grandeur représentative de sa corrélation avec l'image référence ou une sous image de cette dernière,

c) calculer pour l'image test (I) un score de comparaison S(I,J) avec l'image référence (J), ce score étant fonction de la ou des grandeurs représentatives de la corrélation ($C_i$) et de la ou des mesures de qualité ($Q_j$), ce que l'on peut écrire par exemple

$$S(I,J) = F\left(C_1...C_i...,C_N,Q_1...,Q_j...,Q_P\right).$$

pour N grandeurs de corrélation et P mesures de qualité.

Par « mesure de qualité associée à l'imagette » il faut comprendre que la mesure de qualité peut être associée à l'imagette telle quelle ou à toute représentation éventuelle de celle-ci par au moins une transformation mathématique.

Par « corrélation avec l'image référence », il faut comprendre que la corrélation peut être déterminée avec l'image référence telle quelle ou avec une sous-image de celle-ci ou représentation éventuelle de l'image référence ou de la sous-image par au moins une transformation mathématique, qui peut être la même que pour la mesure de qualité.

Le terme « corrélation » indique une mesure de similitude entre les deux images, imagettes, ou des transformations mathématiques quelconques de celles-ci que l'on cherche à comparer. Cette mesure peut être définie comme une ou plusieurs opérations sur la matrice de convolution obtenue entre les images. Elle peut aussi être définie par une mesure de distance renormalisée (1-distance) de manière à avoir une mesure de similitude sur les images ou sur des représentants, à partir de la distance considérée, par exemple : la distance de Hamming...

Le score de comparaison peut permettre une prise de décision quant à l'identité de l'individu dans le cas d'une application en biométrie.

Le procédé selon l'invention peut s'appliquer à des images biométriques du visage, des empreintes palmaires, des empreintes digitales, des veines de la main, de la forme de la main ou de l'iris, entre autres.

Une « transformation mathématique » au sens de la présente invention peut comporter par exemple une analyse multirésolution, une analyse de Fourier, une binarisation, une représentation par contours ou par points caractéristiques, une représentation statistique comme par exemple une analyse en composantes principales (PCA) ou une analyse discriminante (LDA) ou une analyse en composantes indépendantes (ICA) dans les espaces d'origine ou après transformation par un noyau quelconque (respectivement KPCA, KLDA, KICA...), une compression de l'image par tout moyen après avoir effectué au moins une de ces transformations, ou une compression de l'image par tout moyen.

Par exemple, pour le visage, une représentation possible parmi d'autres est la PCA où l'image du visage est transformée en un vecteur de taille inférieure à celle de l'image. Pour l'empreinte, une transformation possible parmi d'autres est de représenter l'empreinte par les minuties (points particuliers dans l'image de l'empreinte). Pour l'iris, une transformation possible parmi d'autres est d'utiliser les filtres de Gabor comme un moyen d'analyse multirésolution.

Les techniques statistiques de PCA et LDA sont par exemple décrites dans l'ouvrage de M.Volle « Analyse de données », Economica, 3ième Edition, 1985 ; celle de ICA dans l'ouvrage de A. Hyvarinen, J. Karhunen, E. Oja, « Independent Component Analysis », John Wiley & Sons, 2001; et celles de KPCA, KLDA et KICA dans l'ouvrage de J. Shawe-Taylor et N. Cristianini « Kernel Methods for Pattern Analysis», Cambridge University Press, 2004, qui sont incorporées par référence.

L'invention peut faciliter l'acquisition d'une image de l'iris, ce qui peut s'avérer avantageux lorsque cette acquisition et la reconnaissance qui en découle conditionnent l'accès à une zone sécurisée où doit pénétrer un flux de personnes important. La performance du procédé peut également faciliter son implémentation dans des systèmes de reconnaissance d'images d'une biométrie quelconque disposant de capteurs relativement peu coûteux limitant la qualité des images obtenues, présents par exemple sur des appareils grand public tels que des ordinateurs personnels, des terminaux portables, par exemple des téléphones mobiles ou assistants personnels numériques ou des serrures électroniques.

La performance du procédé peut également faciliter son implémentation dans des systèmes de reconnaissance d'images d'une biométrie quelconque sur des terminaux nomades à usage professionnel ou à usage personnel, sur lesquels bien que les capteurs soient d'une bonne qualité, les conditions environnementales d'acquisition ne permettent pas dans certaines situations d'acquérir des images de bonne qualité.

Par exemple, dans le cas du visage, un terminal nomade de ce type, lorsque l'éclairage est inégal sur différentes zones du visage, donnera lieu à des images de visage avec des zones d'ombre.

La performance du procédé peut également faciliter son implémentation dans des systèmes de reconnaissance d'images d'une biométrie quelconque avec des capteurs de bonne qualité mais opérant dans des conditions applicatives générant des images de qualité limitée, voire faible.

Par exemple, dans le cadre de la vidéo-surveillance, un système de reconnaissance d'images biométriques peut être équipé de caméras CCD, certaines munies de zooms puissants pour acquérir le visage et aussi zoomer sur la zone des yeux pour une capture de l'iris également, dans une zone pouvant éventuellement baigner dans de l'éclairage proche infrarouge, par exemple une station de métro, une gare, une zone d'aéroport, une zone sensible, etc. Les images de visage et d'iris résultantes auront la propriété d'être de qualité variable selon les zones de l'image. Plus généralement, certaines conditions d'acquisition propres à une application donnée, notamment des conditions d'acquisition dites « en mobilité » utilisant des plateformes mobiles pour l'acquisition des données biométriques, où la lumière est non contrôlée, et/ou applications où le sujet ne coopère pas, et où le flux de personnes, même si le sujet coopère, contraint le système à réaliser une acquisition à une distance plus importante que dans des conditions normales, donneront lieu à des images biométriques de qualité variable selon les zones de l'image.

Une image référence peut être découpée en une pluralité d'imagettes références pour lesquelles on calcule au moins une mesure de qualité.

L'image référence peut être acquise au cours d'une session d'apprentissage du procédé selon l'invention et une image test peut être acquise lors d'une session ultérieure au cours de laquelle le procédé selon l'invention est exécuté. Les sessions ci-dessus peuvent être relativement espacées dans le temps, par exemple de plusieurs heures, jours ou semaines.

En variante, les images référence et test peuvent être acquises au cours d'une même session d'exécution du procédé selon l'invention.

Le score de comparaison peut être fonction de la ou des grandeurs représentatives de la corrélation, de la ou des mesures de qualité associées aux imagettes test et de la ou des mesures de qualité associées aux imagettes référence.

La ou les grandeurs représentatives de la corrélation peuvent être calculées à partir d'une corrélation normalisée entre deux images ou leurs représentations respectives par au moins une transformation mathématique.

La ou les grandeurs de corrélation peuvent être choisies parmi le maximum de corrélation, le deuxième maximum, leur(s) position(s), la moyenne ou l'écart-type de la matrice de corrélation.

La ou les grandeurs représentatives de la corrélation peuvent par exemple être calculées à partir de la distance de Hamming entre deux codes représentatifs des images ou imagettes de référence et de test.

La transformation mathématique peut être une analyse multirésolution effectuée par l'utilisation de filtres de Gabor bidimensionnels et par l'extraction de la phase de Gabor 2D. Elle peut aussi être un code binaire après démodulation de la phase de Gabor 2D.

L'une au moins des mesures de qualité peut être déterminée en appliquant un modèle à apprentissage statistique de type Modèle de Markov Caché (HMM).

L'une au moins des mesures de qualité peut être déterminée en appliquant un modèle à apprentissage statistique de type Modèle à Mixture de Gaussiennes (GMM).

En variante, d'autres modèles à apprentissage statistiques peuvent être utilisés comme les Champs markoviens, Arbres de Markov Cachés (Hidden Markov Tree ou HMT), Machines à Vecteurs de Support (Support Vector Machine ou SVM), réseaux neuronaux, réseaux bayésiens, ...

Les Modèles de Markov Cachés sont décrits notamment dans la publication L.R Rabiner « A tutorial on Hidden Markov Models and Selected Applications in Speech Recognition », Proc. of IEEE, Vol. 77, No. 2, février 1989.

Les Modèles à Mixtures de Gaussiennes GMM sont un cas particulier d'un HMM (un seul état) et sont décrits dans la publication D.A. Reynolds, C. Rose, « Robust Text-Independent Speaker Identification Using Gaussian Mixture Speaker Models », IEEE Transactions on Speech and Audio Processing, Vol. 3, No.1, janvier 1995.

Les Champs Markoviens sont décrits notamment dans l'ouvrage de Ross Kinderman et Laurie Snell « Markov Random Fields and Their Applications », AMS publications, 1980.

Les Modèles d'Arbres de Markov Cachés sont notamment introduits dans l'article de J. Durand, P. Gonçalves and Y. Guédon « Computational Methods for Hidden Markov Tree Models: An Application to Wavelet Trees ». IEEE Transactions on Signal Processing, Vol. 52, No. 9, Septembre 2004.

Les réseaux de neurones sont par exemple décrits dans l'ouvrage de S. Haykin «Neural Networks : A Comprehensive Foundation », 2ème édition, Prentice Hall International, 1999.

Les Machines à Vecteurs de Support sont décrites notamment dans l'ouvrage de Nello Cristianini et John Shawe-Taylor. « An Introduction to Support Vector Machines and other Kernel-based Learning Methods », Cambridge University Press, 2000, et dans l'ouvrage de Vladimir Vapnik «The Nature of Statistical Learning Theory », Springer-Verlag, 1999.

Les réseaux bayésiens sont notamment décrits dans l'ouvrage de Ann Becker et Patrick Naîm « Les réseaux bayésiens », Editions Eyrolles, 1999.

Un exemple de mise en oeuvre de la mesure de la qualité à partir d'un modèle statistique est d'apprendre un GMM à 3 gaussiennes à partir des histogrammes des niveaux de gris de plusieurs images ou imagettes propres. La mesure de qualité peut être égale à la moyenne sur les gaussiennes des probabilités obtenues sur toute l'image ou sur l'imagette. Une image propre est une image susceptible d'être traitée de façon satisfaisante dans les phases postérieures du processus de mesure de qualité.

L'image référence et test peuvent être des données biométriques dont la richesse et la qualité de l'information utile au traitement ne sont pas uniformes.

L'image référence et l'image test peuvent être directement acquises par un capteur quelconque ou être extraites d'une séquence vidéo.

L'image référence et l'image test peuvent provenir d'images de l'iris.

Le procédé selon l'invention s'avère dans le cas de l'iris relativement performant, notamment permet une reconnaissance avec un taux d'erreur relativement faible, même en présence d'images dégradées, par exemple en raison de bruits lors de l'acquisition de l'image de l'iris et/ou de l'utilisation d'un système d'acquisition de mauvaise qualité et/ou en raison de la présence sur l'image de l'iris d'éléments perturbateurs tels que par exemple des cils, la paupière ou des reflets parasites.

Dans le cas d'images biométriques du visage, d'empreintes palmaires, des empreintes digitales, des veines de la main, de la forme de la main ou de l'iris, les différents bruits peuvent être liés aux conditions d'acquisition et à des caractéristiques du sujet.

Une mesure de qualité peut être représentative d'une quantité de bruit d'occultation dans l'imagette.

Dans le cas d'images du visage, on désigne par « bruits d'occultation » les effets de conditions d'éclairage non contrôlées qui masquent une zone du visage par des ombres ou des reflets, ainsi que des caractéristiques du sujet qui masquent l'information utile, par exemple : la barbe, les cheveux, les lunettes... Ce bruit d'occultation est absent lorsque les conditions d'acquisition sont contrôlées mais est très important dans certains contextes applicatifs, notamment de mobilité, par exemple lors de l'acquisition du visage sur plateforme mobile dans des environnements à éclairage non contrôlé voire quasi absent ou dans lesquels le sujet ne coopère pas à l'acquisition, par exemple en vidéo surveillance.

Dans le cas d'images de l'iris, le bruit d'occultation peut comporter l'occlusion de la texture de l'iris par des paupières, des cils ou des reflets lumineux dus à l'environnement de capture ou aux caractéristiques du sujet, notamment en cas de port de lunettes ou de lentilles ou dus à la dilatation de la pupille.

Une mesure de qualité peut être représentative d'une quantité de flou.

On désigne par « flou » aussi bien le flou de bougé résultant d'un mouvement de la personne dont l'image est acquise que le flou optique, dû par exemple à la qualité du système d'acquisition de l'image, par exemple au manque de profondeur de champ ou à l'erreur de mise au point.

Le calcul de plusieurs mesures de qualité peut permettre de mieux discriminer les imagettes fortement bruitées et non utiles des imagettes faiblement bruitées et utiles, et peut améliorer la performance du système de reconnaissance.

La fonction F précitée peut avoir par exemple pour expression

$$F = \frac{\sum \dfrac{F_R(I,J) - \mu_R}{\sigma_R}}{4}$$

où

$$F_R(C_1(W_R), C_2(W_R), h(Q_j^{(b)}, Q_j^{(a)})) = \frac{Moyenne_{W_R}(h(Q_j^{(b)}, Q_j^{(a)}) * C_1(W_R))}{std_{W_R}(h(Q_j^{(b)}, Q_j^{(a)}) * C_2(W_R))}$$

avec

$$h(Q_j^{(b)}, Q_j^{(a)}) = \begin{cases} 0 & si \quad \min(Q_j^{(b)}, Q_j^{(a)}) < G \\ \min(Q_j^{(b)}, Q_j^{(a)}) \end{cases}$$

où $W_R$ représente une comparaison entre une imagette test et une imagette référence filtrée par l'analyse de Gabor à une résolution R donnée, $C_1(W_R), C_2(W_R)$ représentent respectivement la valeur du maximum de corrélation, encore appelé pic de corrélation, et sa position lors de la comparaison $W_R$; $Q_j^{(b)}$ et $Q_j^{(a)}$ représentent respectivement les valeurs d'une mesure de qualité calculées sur une imagette test et l'imagette référence correspondante, G est une valeur seuil prédéfinie pouvant être comprise par exemple entre 0,4 et 0,7 dans le cas de l'utilisation d'un modèle probabiliste pour la mesure de la qualité. $Moyenne_{W_R}$ et $std_{WR}$ représentent respectivement la moyenne et l'écart-type sur l'ensemble des orientations.

Dans le cas où plusieurs orientations sont utilisées dans l'analyse multirésolution, les différentes grandeurs de corrélation intervenant dans le calcul de la fonction $F_R$ (par exemple la moyenne des pics de corrélation et l'écart-type des positions des pics) peuvent être calculées à une orientation $\theta$ et une résolution R données, ou sur toutes les orientations considérées à une résolution R donnée.

Le calcul des grandeurs représentatives de corrélation entre une imagette test et l'imagette référence correspondante peut être effectué à partir d'une matrice de corrélation M telle que définie dans l'ouvrage J.C. Russ « The Image Processing Handbook », CRC Press, 4ième édition, 2002, incorporé par référence, pour une mise en comparaison W entre une imagette test ou sa représentation par au moins une transformation mathématique quelconque et l'imagette référence correspondante ou sa représentation par au moins une transformation mathématique quelconque, de préférence la même. Un exemple de calcul d'une grandeur de corrélation lors d'une comparaison W est le suivant:

$$C(W) = (Max_W(M) - Mean_W(M)) * Std_W(M),$$

où $Max_W(M)$ représente la valeur maximum de la matrice de corrélation encore appelée pic de corrélation, $Mean_W(M)$ représente la valeur moyenne de la matrice de corrélation et $Std_W(M)$ représente l'écart-type de la matrice de corrélation. Les notions de moyenne et d'écart-type sont définies dans l'ouvrage de A.Monfort, «Cours de probabilités», Economica, 2ième édition, 1980.

D'autres expressions particulières de h sont possibles, notamment lorsqu'il y a plus d'une mesure de qualité sur chaque imagette, par exemple dans le cas de deux mesures de qualité $Q_1$ et $Q_2$:

$$h(Q_1,Q_2) = \begin{cases} 0 & si \quad moyenne(Q_1,Q_2) < G \\ \hline moyenne(Q_1,Q_2) \end{cases}.$$

$$h(Q_1,Q_2) = \begin{cases} 0 & si \quad \max(Q_1,Q_2) < G \\ \hline \max(Q_1,Q_2) \end{cases}.$$

ou encore, dans le cas de P mesures de qualité $h(Q_1,Q_2,...,Q_P)$ où h est estimée par un réseau de neurones.

Au-delà de cette configuration, une fusion directe des mesures de qualité et des grandeurs de corrélation peut être effectuée ; on peut par exemple considérer :

$$F(C_1(W),C_2(W),Q_1,Q_2,...Q_P) = F(h(W))$$

ou par exemple

$F(h(W)) = moyenne_W(h(w))$ et h(w) est une fonction estimée par un réseau de neurones qui a en entrée les P mesures de qualité et les grandeurs de corrélation pour chaque comparaison W.

Ce réseau fournit par exemple en sortie un score compris entre 0 et 1 correspondant à une vraisemblance de la classe client, c'est-à-dire que plus la valeur du score est proche de 1 plus la probabilité que la comparaison W corresponde à une comparaison d'imagettes d'une même personne est grande.

Chaque imagette test peut avoir par exemple une largeur comprise entre 11 et 111 pixels et une hauteur comprise entre 7 et 21 pixels et l'imagette référence correspondante peut avoir par exemple une largeur comprise entre 31 et 131 pixels et une hauteur comprise entre 11 et 25 pixels.

On désigne par « imagettes correspondantes » les imagettes référence et test correspondant au même sous-ensemble des images référence et test acquises.

L'imagette référence peut présenter une hauteur et une largeur supérieures à celles de l'imagette test correspondante, ce qui peut permettre de remédier à des problèmes éventuels tels que la dilatation ou la contraction de la pupille ou la rotation de l'iris. Dans une mise en oeuvre particulière du procédé sur des images d'iris, cette différence peut être par exemple de 2 à 6, par exemple 4 pixels en hauteur, et de 15 à 25, par exemple 20, pixels en largeur.

Les imagettes pour lesquelles une grandeur représentative de la corrélation est calculée peuvent être sélectionnées parmi la pluralité d'imagettes en comparant une ou plusieurs mesures de qualité à des seuils prédéfinis.

La ou les mesures de qualité associées à une imagette peuvent par exemple être comparées à une valeur prédéfinie et en fonction du résultat de la comparaison l'imagette peut être prise en compte ou non à l'étape c) ci-dessus mentionnée. On peut ainsi ne calculer un score de comparaison à l'étape c) que sur la base des imagettes dont la ou les mesures de qualité sont supérieures à la valeur prédéfinie, laquelle peut être comprise entre 0.4 et 0.7 par exemple pour une mesure de qualité comprise entre 0 et 1.

La mesure de qualité statistique peut aussi être couplée à d'autres méthodes de comparaison entre une image test et une image de référence, comme par exemple le calcul de la distance de Hamming entre deux codes représentatifs des images de référence et de test. Ce couplage peut être effectué de la manière suivante

$$HD_{raw\_m} = \frac{\sum_i \left| codeA(i) - codeB(i) \right| * h(Q_i^{(b)}, Q_i^{(a)})}{\sum_i h(Q_i^{(b)}, Q_i^{(a)})}$$

où codeA et codeB sont les codes représentatifs de l'image de référence et de test et 'i' désigne la ième position du code binaire décrivant l'image A, l'image B et $h(Q_i^{(b)}, Q_i^{(a)})$ est le résultat de la fusion des mesures de qualité statistiques en sortie du modèle statistique pour la position 'i'. HD est la distance de Hamming calculée entre les deux codes correspondants à l'image référence et l'image test.

Les images peuvent être des images d'iris et le système utilisé pour générer les codes représentatifs peut être le système OSIRIS (http://share.int-evry.fr/synview-eph/).

D'autres possibles méthodes de comparaison qui peuvent être couplées à la mesure de qualité statistique sont les méthodes de fusion combinant les scores issus d'au moins deux méthodes de comparaison d'une image test et d'une image de référence, comme la mesure de corrélation normalisée ou la mesure de distance de Hamming normalisée. Cette fusion pour prendre différentes formes, par exemple :

- une fusion séquentielle dans laquelle les méthodes de comparaison sont utilisées les unes en aval des autres ; par exemple on peut d'abord effectuer la comparaison entre une image de référence et une image test par la méthode à base de distance de Hamming pondérée par la mesure de qualité statistique puis, si le score ne permet pas de prendre une décision fiable, alors utiliser la méthode de comparaison à base de corrélation pondérée par la mesure de qualité statistique,
- une fusion de scores par des règles de combinaison (par exemple moyenne, max, min, somme pondérée) ou d'un classifieur (par exemple SVM, réseaux de neurones...) exploitant ainsi la complémentarité des deux méthodes de comparaison.

Selon un autre de ses aspects, l'invention a encore pour objet un procédé de reconnaissance biométrique d'un individu comportant les étapes consistant à :

- acquérir au moins une première image d'une biométrie de cet individu,
- générer à partir de cette image une pluralité d'imagettes,
- acquérir au moins une deuxième image de l'individu,
- générer en mettant en oeuvre le procédé de comparaison d'images tel que défini ci-dessus, une première information représentative du degré de corrélation entre la première image et la deuxième image, et
- générer sur la base de cette première information une deuxième information relative à l'identité de l'individu.

L'information représentative du degré de corrélation entre la première image et la deuxième image doit se comprendre comme incluant une information unique représentative du degré de corrélation entre la première image telle quelle ou sa représentation par au moins une transformation mathématique et la deuxième image telle quelle ou sa transformation par au moins une transformation mathématique.

Selon un autre de ses aspects, l'invention a encore pour objet un procédé de reconnaissance biométrique d'un individu, comportant les étapes consistant à :

- lire dans une mémoire ou sur un support des données représentatives d'une première image ou un identifiant renvoyant à ces données, par exemple après interrogation d'un serveur,
- acquérir au moins une deuxième image de l'individu,
- générer en mettant en oeuvre le procédé de comparaison d'images tel que défini ci-dessus une première information représentative du degré de corrélation entre la première image et la deuxième image, et

- générer sur la base de cette première information une deuxième information relative à l'identité de l'individu.

L'information représentative du degré de corrélation entre la première image et la deuxième image doit se comprendre comme incluant une information représentative du degré de corrélation entre la première image telle quelle ou sa représentation par au moins une transformation mathématique et la deuxième image telle quelle ou sa transformation par au moins une transformation mathématique.

Les données représentatives de la première image peuvent être des gabarits ayant pour format :

- la première image acquise en couleur et/ou en niveaux de gris ou représentée par des paramètres après au moins une transformation mathématique de l'image,
- la première image normalisée, en couleur et/ou en niveaux de gris, ou représentée par des paramètres après au moins une transformation mathématique de l'image,
- un ensemble d'imagettes obtenues à partir de l'image acquise ou de l'image normalisée en couleur et/ou en niveaux de gris ou à partir de l'image représentée par des paramètres après au moins une transformation mathématique.

Par « gabarit » il faut comprendre toute représentation d'une image d'iris par une transformation mathématique.

Les données représentatives peuvent comporter au moins une mesure de qualité et/ ou un sous-ensemble d'imagettes sélectionnées selon au moins une mesure de qualité associée à chacune de ces imagettes.

Selon un autre de ses aspects, l'invention a encore pour objet un procédé de programmation d'une mémoire, comportant les étapes consistant à :

- acquérir une image référence d'une biométrie d'une personne,
- générer à partir de cette image référence une pluralité d'imagettes référence,
- déterminer des données représentatives de l'image référence et/ou des imagettes référence,
- enregistrer ces données dans la mémoire.

Par « programmation d'une mémoire » il faut comprendre l'écriture dans une puce ou dans une mémoire de masse, par exemple un disque dur.

L'enregistrement des données de l'image peut selon l'invention s'effectuer de plusieurs manières : on peut par exemple enregistrer l'image originale ou l'image normalisée ou la série d'imagettes obtenues à partir de l'image référence. On peut aussi enregistrer leurs représentations selon une transformation mathématique.

Dans le cas d'une mise en oeuvre sur l'iris, on peut par exemple enregistrer les coefficients de Gabor des images ou imagettes selon des résolutions et orientations choisies ou leurs versions compressées.

La mesure de qualité peut être incorporée dans l'enregistrement des données représentatives. On peut par exemple associer une mesure de qualité à chaque gabarit enregistré. On peut aussi n'enregistrer que les gabarits dont la mesure de qualité est supérieure à une valeur donnée.

La mémoire peut être intégrée à un serveur ou à une base de données ou disposée sur un support, par exemple un document d'identité biométrique, par exemple un passeport, une carte d'identité, un visa ou un permis de conduire, une carte à puce, une carte SIM ou une carte de paiement, de crédit ou d'accès, à une clé, ou être distribuée, une partie de l'information étant par exemple enregistrée sur l'un des supports précédemment cités et une autre partie sur un autre de ces supports ou sur un serveur ou une base de données.

Selon un autre de ses aspects, l'invention a encore pour objet un système d'identification d'un individu, configuré pour effectuer une comparaison d'images entre une image référence et une image test dont on cherche à évaluer un degré de corrélation avec l'image référence, le système comportant :

- un système d'acquisition de l'image test et de l'image référence, par exemple une caméra couplée à une lumière proche infrarouge,
- une unité informatique agencée pour :

  a) générer à partir de l'image test et de l'image référence une pluralité d'imagettes test et référence,
  b) calculer pour chaque imagette:

  - au moins une mesure de qualité associée à cette imagette y compris sa représentation par au moins une transformation mathématique,
  - au moins une grandeur représentative de la corrélation avec l'image référence ou une sous image de cette dernière y compris leurs représentations respectives par au moins une transformation mathématique,

  c) calculer pour l'image test un score de comparaison avec l'image référence, ce score étant fonction de la ou des grandeurs représentatives de la corrélation ($C_i$) et de la ou des mesures de qualité ($Q_j$), ce qui peut s'écrire par exemple

$$S(I,J) = F\left(C_1...C_i...,C_N,Q_1...,Q_j...,Q_P\right)$$

pour N grandeurs de corrélation et P mesures de qualité.

Selon un autre de ses aspects, l'invention a encore pour objet un système d'identification d'un individu configuré pour effectuer une comparaison d'images entre une image référence et une image test dont on cherche à évaluer un degré de corrélation avec l'image référence, le système comportant une mémoire dans laquelle sont enregistrées des données représentatives de gabarits des images test et référence, ou étant agencé pour accéder à une mémoire dans laquelle sont enregistrées des données représentatives de gabarits des images test et référence,
et comportant une unité informatique agencée pour :

a) calculer pour chaque gabarit :

-    au moins une mesure de qualité associée au gabarit,
-    au moins une grandeur représentative de la corrélation entre un gabarit associé à l'image test et le gabarit associé à l'image référence correspondante,

b) calculer pour l'image test un score de comparaison avec l'image référence, ce score étant fonction de la ou des grandeurs représentatives de la corrélation et de la ou des mesures de qualité, par exemple selon l'équation

$$S(I,J) = F\left(C_1...C_i...,C_N,Q_1...,Q_j...,Q_P\right).$$

définie plus haut

pour N grandeurs de corrélation et P mesures de qualité.

Le système peut être intégré par exemple à un appareil électronique tel qu'un ordinateur, ordinateur personnel, un téléphone portable, un assistant personnel numérique, une serrure électronique, un terminal nomade à usage professionnel ou personnel, un sas ou portail d'accès à une zone sécurisée, un équipement professionnel ou industriel, par exemple médical, nucléaire ou spatial, ou un armement.

Le système peut également être intégré à un véhicule, par exemple une automobile.

Le système peut éventuellement être associé à tout autre dispositif de biométrie.

Selon un autre de ses aspects, l'invention a encore pour objet un produit programme d'ordinateur comportant des instructions lisibles par une unité informatique afin de permettre une comparaison d'images entre au moins une image référence et au moins une image test dont on cherche à évaluer un degré de corrélation avec l'image de référence, ces instructions commandant le fonctionnement de l'unité informatique de manière à :

a) accéder à une ou plusieurs mémoire(s) dans laquelle/lesquelles sont enregistrées des données représentatives d'une ou plusieurs images référence,
b) générer des imagettes test à partir d'au moins l'image test ou accéder à une mémoire dans laquelle sont enregistrées des données représentatives d'au moins l'image test,
c) calculer pour chaque imagette test:

-    au moins une mesure de qualité associée à cette imagette, y compris sa représentation par au moins une transformation mathématique,
-    -au moins une grandeur représentative de la corrélation entre l'imagette test et l'imagette référence correspondante, y compris leurs représentations respectives par au moins une transformation mathématique, qui peut être la même que ci-dessus,

d) calculer pour l'image test (I) un score de comparaison S(I,J) avec l'image référence (J), ce score étant fonction de la ou des grandeurs représentatives de la corrélation ($C_i$) et de la ou des mesures de qualité ($Q_j$), ce qui peut par exemple s'écrire

$$S(I,J) = F\left(C_1...C_i...,C_N,Q_1...,Q_j...,Q_P\right).$$

pour N grandeurs de corrélation et P mesures de qualité.

L'invention pourra être mieux comprise à la lecture de la description détaillée qui va suivre d'exemples de mise en oeuvre non limitatifs de celle-ci, ainsi qu'à l'examen du dessin annexé, sur lequel :

- la figure 1 illustre de manière schématique différentes étapes d'un exemple de procédé selon l'invention,
- la figure 2 représente une image de l'oeil d'un individu à reconnaître,
- la figure 3 illustre un exemple de segmentation de l'image de la figure 2,
- la figure 4 représente l'image test obtenue par transformation de l'image segmentée de l'iris de la figure 3,
- la figure 5a représente un ensemble d'imagettes pour lesquelles au moins une mesure de qualité est calculée,
- la figure 5b représente l'ensemble des imagettes de la figure 5a, dans lequel certaines imagettes ont été remplacées par des pixels noirs, gris ou blancs selon la mesure de qualité calculée,
- les figures 6 et 7 sont des courbes illustrant les performances de différents systèmes de comparaison d'images d'iris,
- la figure 8 représente de manière schématique un exemple de système de comparaison d'image selon l'invention,
- les figures 9 et 10 sont des exemples d'appareils électroniques pouvant comporter le système de comparaison d'images selon l'invention.

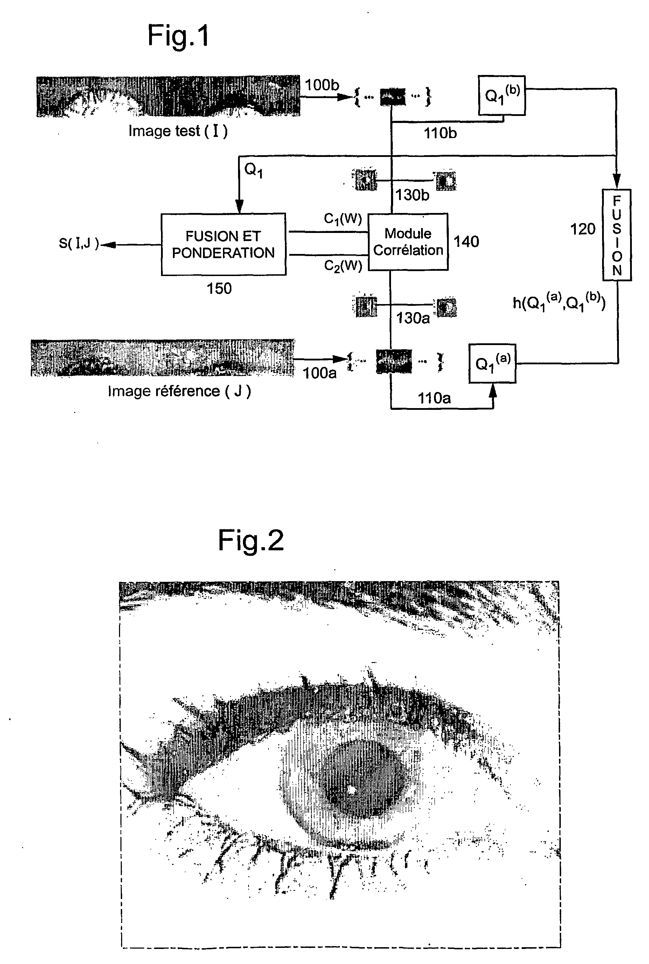

On va décrire, en référence aux figures 1 à 7, un exemple de mise en oeuvre d'un procédé de reconnaissance d'images selon l'invention.

Ce procédé est appliqué dans l'exemple considéré à la reconnaissance d'iris, mais l'invention n'est pas limitée au traitement d'images d'iris et s'applique généralement à tout traitement d'images où il est souhaitable de calculer un degré de corrélation entre une image test et une image de référence et en particulier aux images biométriques.

Néanmoins, l'invention s'avère tout particulièrement adaptée à la reconnaissance d'iris, notamment à la structure des données qui caractérisent la texture de l'iris, permettant par exemple d'analyser l'iris localement en divisant l'image en plusieurs imagettes, par exemple selon plusieurs résolutions par analyse de la phase de Gabor, en étant indépendant des effets de rotation de l'iris par exemple par la prise en compte de la position du pic de corrélation et des bruits en associant un critère de qualité aux mesures de corrélation

Le procédé est dans l'exemple décrit mis en oeuvre en comparant des données provenant d'une image référence à des données d'une image test.

L'acquisition de l'image à partir de laquelle est générée l'image référence et de l'image test sur la base de laquelle est effectuée la comparaison en vue de la reconnaissance peuvent être acquises de la même manière, par exemple au moyen d'un même système d'acquisition d'images, ou au moyen de systèmes d'acquisition d'images différents.

On a représenté à la figure 2 une telle image de départ, par exemple obtenue avec une caméra associée à un éclairage en proche infrarouge.

L'utilisation du proche infrarouge peut par exemple permettre de diminuer le bruit lié à l'éclairage et aux réflexions de la cornée.

Un premier traitement pouvant être mis en oeuvre peut consister à segmenter une telle image de départ afin d'extraire des données relatives à l'iris.

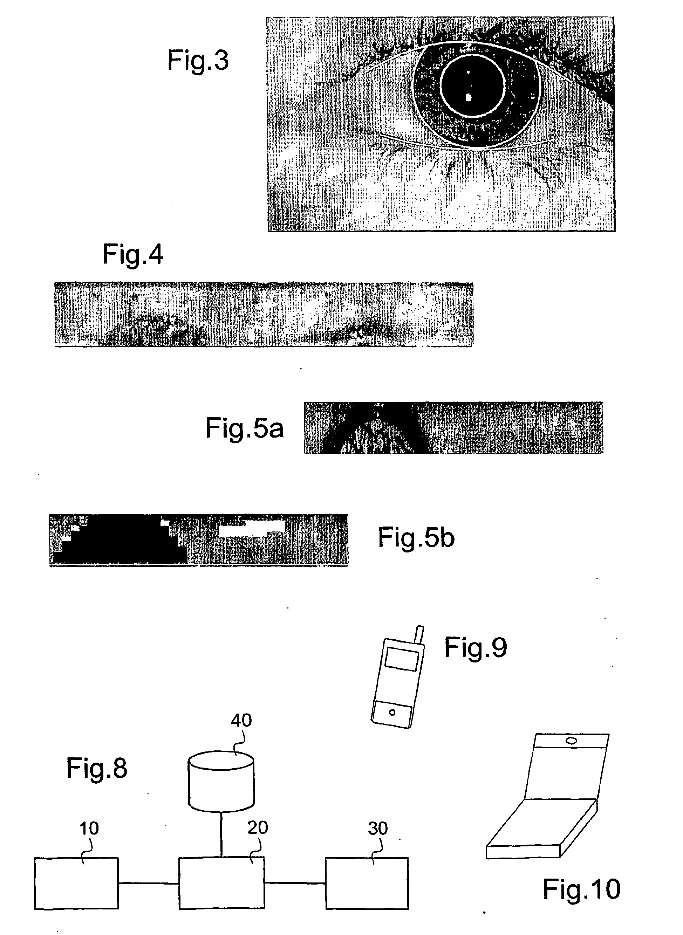

Cette segmentation peut s'effectuer par exemple par la reconnaissance de la forme et de la texture de l'iris, comme illustré à la figure 3.

La segmentation est par exemple effectuée en approximant le contour de la pupille et de l'iris par des cercles et le contour des paupières par des ellipses.

Les brevets US 5 291 560 et US 5 572 596 divulguent des exemples de procédés de segmentation de l'iris pouvant être mis en oeuvre dans le cadre de la présente invention.

L'image de l'iris ainsi segmentée peut être transformée en une image normalisée telle que représentée à la figure 4, par exemple grâce à une transformée pseudo-polaire, tenant compte du fait que les cercles de la pupille et de l'iris ne sont pas parfaitement concentriques.

Une telle transformation est divulguée dans le brevet US 5 291 560 dont le contenu est incorporé par référence.

L'image représentée à la figure 4 peut constituer une image de référence ou une image test, encore appelée image candidate, à laquelle peut s'appliquer le procédé de la figure 1.

Au cours d'étapes respectives 100a et 100b, une pluralité d'imagettes est générée pour l'image référence et pour l'image test.

Une imagette est un sous-ensemble de l'image correspondante.

Dans un exemple de mise en oeuvre de l'invention dans le cas d'une reconnaissance des personnes par l'iris, une série de 80 imagettes par exemple peut être générée à partir de l'image référence et une série d'autant d'imagettes à partir de l'image test.

Deux imagettes adjacentes peuvent être jointives ou se chevaucher. Dans le cas d'une reconnaissance par l'iris, on peut par exemple choisir un chevauchement de moitié entre deux imagettes successives, c'est-à-dire que dans le sens vertical, la limite supérieure ou inférieure d'une première imagette peut constituer la partie centrale d'une deuxième imagette et/ou dans le sens horizontal, la limite gauche ou droite de la première imagette peut constituer la partie centrale d'une deuxième imagette.

Chaque imagette test peut faire par exemple entre 7 et 21 pixels de hauteur et par exemple entre 11 et 111 pixels de largeur. Chaque imagette référence possède dans l'exemple décrit une hauteur et une largeur supérieures à celles des imagettes test.

Au cours des étapes 110a et 110b, des mesures de qualité sont calculées sur les imagettes référence et test respectivement.

Ces mesures de qualité peuvent par exemple être obtenues à partir d'un modèle statistique (GMM) appris sur une série d'images d'iris considérées comme étant nettes et dépourvues de bruits.

Toute présence étrangère à la texture de l'iris affecte la réponse du modèle en baissant la probabilité obtenue à la sortie.

Chaque mesure de qualité dans l'exemple considéré est normalisée entre 0 et 1, la valeur 0 correspondant à une qualité d'imagette médiocre tandis que la valeur 1 est représentative d'une qualité d'imagette excellente.

Les cils, les paupières, les spots lumineux ou tous autres bruits peuvent être détectés par exemple en fixant un seuil G sur la réponse de sortie du GMM. Cette valeur peut être égale à 0.5 ou plus généralement comprise entre 0.4 et 0.7, par exemple.

Dans l'exemple décrit, une mesure de qualité, associée au bruit d'occultation dans les imagettes référence et test est calculée, désignée respectivement par $Q_1^{(a)}$ et $Q_1^{(b)}$.

On ne sort pas du cadre de la présente invention lorsque la mesure de qualité calculée est associée par exemple à la quantité de flou respectivement dans les imagettes référence et test ou lorsque les deux mesures de qualité précédemment citées sont calculées pour chaque imagette test et référence.

A l'étape 120, on détermine une mesure de qualité $Q_1$ pour la chaque paire d'imagettes référence et test considérée, par exemple en fusionnant la mesure de qualité de l'imagette test $Q_1^{(b)}$ et celle de l'imagette référence $Q_1^{(a)}$ par une fonction h quelconque.

On peut retenir par exemple la plus faible des deux mesures, lorsque le modèle de mesure de qualité est appris sur la netteté sur des images d'iris nettes et dépourvues de bruits, la réponse du modèle lorsqu'une imagette d'iris floue lui est présentée aura une probabilité moindre que celle obtenue par une imagette d'iris nette.

Lorsqu'une imagette génère une mesure de qualité inférieure à la valeur du seuil prédéfini, cette imagette peut être considérée comme étant trop dégradée et ne sera pas prise en compte pour comparer l'image test à l'image de référence.

On a représenté à la figure 5a un ensemble d'imagettes pour lesquelles les mesures de qualité sont calculées.

La figure 5b indique la localisation de certaines imagettes selon la valeur de la mesure de qualité la plus faible. Les pixels noirs indiquent les zones où la mesure de qualité est inférieure à 0,5, les pixels gris les zones où cette mesure est comprise entre 0,5 et 0,6, et les pixels blancs les zones où la mesure de qualité est comprise entre 0,6 et 0,8.

Au cours des étapes 130a et 130b, un filtrage est réalisé par exemple au moyen de la phase de l'ondelette de Gabor 2D pour chaque paire d'imagettes test et référence qui a généré une mesure de qualité supérieure à la valeur de seuil précédemment définie.

La ou les grandeurs représentatives de la corrélation $C_1$, ..., $C_N$ entre une imagette test et l'imagette référence correspondante peuvent être déterminées par analyse de la phase de Gabor en effectuant plusieurs corrélations sur différents niveaux de résolution et avec différentes orientations.

L'analyse de Gabor peut par exemple être effectuée sur 4 résolutions et 4 orientations, les quatre résolutions correspondant à des fenêtres d'analyse de 10, 20, 40 et 80 pixels et les quatre orientations correspondant à des angles de 0, $\pi/4$, $\pi/2$ et $3\pi/4$.

A l'étape 140, les imagettes filtrées par l'analyse de Gabor de chaque paire W d'imagettes test et référence sont comparées afin d'obtenir une ou plusieurs grandeurs représentatives de la corrélation.

On effectue par exemple une corrélation normalisée comme celle décrite dans l'ouvrage de J.P. Lewis dans sa référence « Fast Normalized Cross-correlation », publications qui sont incorporées par référence.

Dans l'exemple d'algorithme d'iris décrit, deux grandeurs représentatives de la corrélation $C_1$ et $C_2$ sont par exemple utilisées:

- la valeur du pic de corrélation normalisée $C_1$ (W) obtenue en soustrayant la moyenne de la matrice de corrélation et en multipliant par la valeur de l'écart-type de cette même matrice selon l'équation ci-dessous,

$$-C_1(W) = (Max_W(M) - Mean_W(M)) * std_w(M)$$

où M désigne la matrice de corrélation définie précédemment, $Max_w$ représente la valeur du pic de corrélation, $Mean_w$ la moyenne de la matrice et $Std_w$ l'écart-type associé à cette dernière,
et,

- la position du pic $C_2(W)$

Une méthode de reconnaissance se limitant à la seule information $C_1(W)$ serait relativement sensible aux changements d'illumination et aux variabilités dues aux phénomènes de rotation du motif recherché et d'échelle de ce dernier.

Certains spots lumineux sur l'image pourraient par exemple conduire à un pic de corrélation plus important qu'un vrai motif présent dans l'image, même dans le cas de l'utilisation d'un processus de corrélation normalisé, ce qui pourrait nuire à la fiabilité du procédé de comparaison.

Afin d'améliorer la fiabilité de la méthode, une deuxième grandeur représentative de la corrélation $C_2(W)$ est par exemple calculée en prenant également par exemple en compte la position du pic de corrélation obtenu lorsque chaque imagette test et l'imagette de référence correspondante sont comparées. Ceci repose sur l'hypothèse selon laquelle si l'on compare une image test I et une image de référence correspondante J de la même personne, la valeur du pic de corrélation sera élevée et la position du pic presque constante malgré les rotations qui peuvent intervenir entre les deux imagettes.

On peut calculer ensuite à l'étape 150 un score de comparaison S(I,J) pour chaque image test I et chaque image référence correspondante J, en pondérant les grandeurs représentatives de la corrélation $C_1(W)$ et $C_2(W)$ par la mesure de qualité $Q_1$ déterminée à l'étape 120.

Le score de comparaison S(I,J) correspond à la distance définie pour mesurer le degré de corrélation entre l'image test I et l'image correspondante de référence J. Comme indiqué ci-dessus, les imagettes peuvent être préalablement filtrées avant d'être corrélées entre elles. Les grandeurs de corrélation peuvent dépendre de la taille des filtres utilisés. S (I,J) peut ainsi être une combinaison de plusieurs fonctions $F_R(I,J)$ qui représentent le score calculé sur les paires d'imagettes test et référence filtrées par un filtre de Gabor de même résolution mais pas nécessairement même orientation, lorsque l'image test I est comparée à l'image de référence J,).

$F_R(I,J)$ peut être déterminé par exemple selon l'équation

$$F_R(I,J) = \frac{Mean_{W_R}(Q_1 \cdot C_1(W_R))}{Std_{W_R}(Q_1 \cdot C_2(W_R))},$$

$W_R$ étant la mise en comparaison effectuée entre chaque paire d'imagettes référence et test filtrée par analyse de Gabor à une résolution R et éventuellement selon plusieurs orientations.

Le score de comparaison à une résolution donnée peut résulter d'une fusion d'une information provenant des valeurs des pics de corrélation, d'une information de ses positions et des mesures de qualité de la série de paires d'imagettes.

Le score de comparaison calculé à l'étape 150 peut être généré en utilisant les différentes mesures de qualité et les grandeurs de corrélation sur l'ensemble de paires d'imagettes référence et test.

Cette fusion peut reposer dans le cas de l'iris par exemple sur trois hypothèses:

a) plus la paire d'imagettes possède une mesure de qualité forte plus elle doit influencer le score final de similitude,
b) plus la moyenne entre les valeurs des pics de corrélation sur l'ensemble des paires d'imagettes est grande, plus les images référence et test peuvent être considérées comme provenant de la même personne,
c) plus l'écart-type des positions du pic de corrélation sur l'ensemble des paires d'imagettes est faible, plus les images de référence et test peuvent être considérées comme appartenant à la même personne.

Le score final de corrélation entre les deux images I et J est par exemple une fusion des scores calculés sur les quatre résolutions

$$S(I,J) = f(F_R(I,J)) \; ;$$

La fonction f peut être par exemple une analyse discriminante, un réseau de neurones, un SVM ou toute autre fonction de fusion.

Dans un exemple de mise en oeuvre simple de la fusion, celle-ci correspondant à l'équation suivante

$$S(I,J) = \frac{\sum \dfrac{F_R(I,J) - \mu_R}{\sigma_R}}{4}$$

où $\mu_R$ et $\sigma_R$ représentent respectivement la moyenne et l'écart-type des scores calculés à la résolution R et résultant des comparaisons de paires d'images test et référence correspondant à deux personnes différentes.

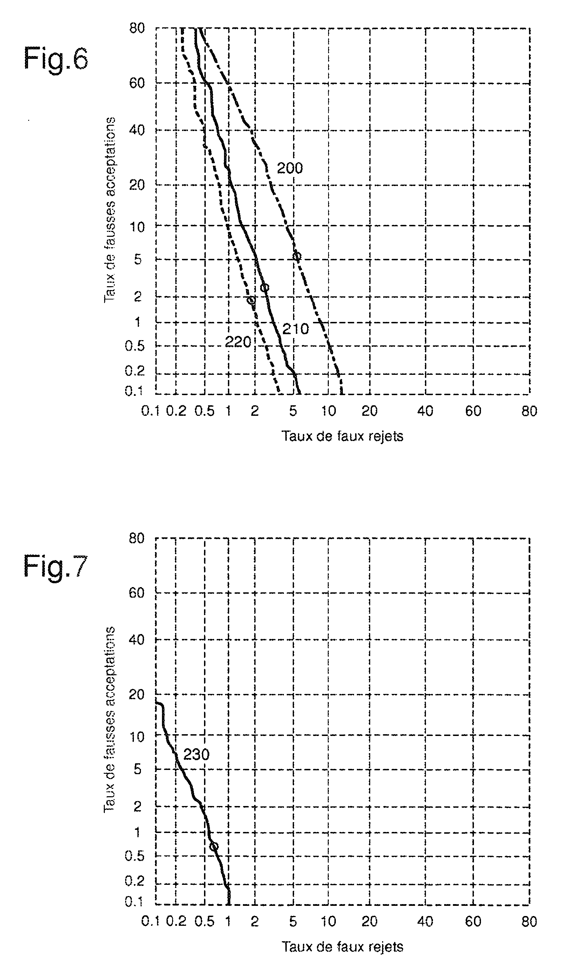

On a représenté aux figures 6 et 7 des courbes traduisant la performance de différents systèmes de comparaison d'images entre une image de référence et une image test dont on cherche à évaluer un degré de corrélation avec l'image de référence.

Ces courbes ont pour ordonnées le taux de fausses acceptations et pour abscisses le taux de faux rejets des images.

La courbe 200 traduit la performance d'un système dans lequel le score de comparaison entre chaque imagette test et chaque imagette référence correspondante ne serait calculé qu'en fonction de la valeur du pic de corrélation, la courbe 210 correspond à un système dans lequel le score de comparaison entre chaque imagette test et chaque imagette de référence correspondante ne serait calculé qu'en fonction de la position du pic de corrélation et la courbe 220 représente un système dans lequel ce score est calculé en fusionnant les informations relatives à la valeur du pic de corrélation et à la position de ce pic de corrélation.

La courbe 230 représentée à la figure 7 illustre la performance d'un exemple de système selon l'invention, dans lequel le score de comparaison est établi en prenant en compte la valeur du pic de corrélation obtenu en comparant chaque imagette test et chaque imagette référence correspondante, la position de ce pic de corrélation et la qualité de l'imagette test considérée.

Le procédé selon l'invention peut être mis en oeuvre dans un système de comparaison d'images tel que celui représenté schématiquement à la figure 8.

Un tel système peut comporter un moyen d'acquisition d'images 10, une unité informatique de traitement des données 20 et peut communiquer, le cas échéant, avec une interface 30 destinée à interagir avec l'environnement du système.

L'unité de traitement 20 est par exemple un ordinateur ou micro-ordinateur ou tout autre système comportant au moins un microprocesseur ou microcontrôleur pouvant être programmé pour mettre en oeuvre le procédé tel que décrit précédemment.

L'unité de traitement 20 peut comporter une base de données intégrée, comportant par exemple une ou plusieurs mémoires électroniques et/ou magnétiques et/ou optiques ou autres, et/ou peut être agencée pour communiquer avec une base de données externe 40, par exemple par un réseau informatique, par exemple un réseau intranet ou Internet.

Le système d'acquisition d'images 10 peut comporter tout capteur permettant l'acquisition d'une image à partir de laquelle est générée l'image test à comparer avec l'image référence.

Il peut s'agir par exemple d'un capteur optique dans le cas de la reconnaissance d'iris, notamment une caméra, de préférence couplée à une illumination proche infrarouge, présentant une résolution suffisante pour la performance recherchée, par exemple 640*480.

Le système d'acquisition d'images 10 et l'unité de traitement 20 peuvent être présents au sein d'un même bâti, boîtier ou appareil, par exemple au sein d'une borne d'identification ou d'un appareil portable tel que par exemple un téléphone portable comme illustré à la figure 9 ou un ordinateur portable tel qu'illustré à la figure 10.

En variante, les moyens d'acquisition d'images 10 peuvent être délocalisés relativement à l'unité de traitement 20, les images à identifier ou authentifier étant par exemple transmises par un réseau informatique tel qu'intranet ou Internet depuis le moyen d'acquisition d'images 10 à l'unité de traitement 20.

Le cas échéant, les données transmises par le système d'acquisition d'images 10 peuvent être au moins partiellement traitées et/ou cryptées avant transmission à l'unité de traitement 20, afin notamment de garantir la sécurité et/ou alléger le traitement mis en oeuvre par l'unité de traitement 20.

La base de données 40, qu'elle soit intégrée à l'unité de traitement 20 ou externe à celui-ci, peut stocker des images de référence et/ou des paramètres de référence associés, pour une pluralité d'individus préalablement enregistrés dans le système.

Lorsque le système de comparaison d'images est mis en oeuvre dans le cadre de l'identification d'individus, le système de reconnaissance peut communiquer avec une interface 30 qui permet par exemple de commander l'ouverture d'un moyen d'accès à une zone sécurisée, par exemple un portillon automatique ou un sas.

L'interface 30 peut également permettre de déclencher une certaine action en fonction du résultat de l'identification, par exemple le démarrage d'un véhicule ou la poursuite de l'exécution d'un programme ou du fonctionnement d'un appareil.

L'invention n'est pas limitée aux exemples qui viennent d'être décrits.

On peut notamment mettre en oeuvre le procédé, dans des variantes de l'invention, avec d'autres modèles statistiques tels que les modèles de Markov cachés, les modèles bayésiens ou les champs de Markov pour le calcul des mesures de qualité sur les imagettes.

Dans le cas où plusieurs images de référence et/ou de test sont disponibles, plusieurs stratégies sont possibles. En effet, il est possible d'effectuer toutes les comparaisons possibles entre la série d'images test et la série d'images de référence. La mesure de corrélation maximale peut constituer un moyen simple de calculer un score final résultant de cette série de comparaisons. La mesure de qualité peut aussi intervenir : ainsi la paire d'images de référence et test qui possède, après fusion des mesures de qualité, la mesure de qualité la plus grande pourrait être la seule à être utilisée pour générer le score fmal entre la série d'images test et d'images de référence. On peut aussi fusionner les scores calculés pour chaque paire d'images test et référence et les mesures de qualité associées à ces dernières, après fusion des mesures de qualité obtenues, en pondérant chaque score par la mesure de qualité pour chaque paire d'images correspondante.

L'expression « comportant un » doit être comprise comme synonyme de « comportant au moins un », sauf si le contraire est spécifié.

L'expression « une image » ou « l'image » doit être comprise comme synonyme de « au moins une image » ou « au moins l'image », sauf si le contraire est spécifié.

L'expression « une image » doit être comprise comme synonyme d'une image ou d'une « transformation mathématique » de celle-ci.

**Revendications**

1. Procédé de comparaison d'au moins une image test avec au moins une image référence, comportant les étapes consistant à :

   a) générer à partir de l'image test (I) et de l'image référence (J) une pluralité de paires d'imagettes test et référence,
   b) calculer pour chaque imagette test :

   - au moins une mesure de qualité ($Q_j^{(b)}$) déterminée en appliquant un modèle à apprentissage statistique, associée à cette imagette test,
   - au moins une grandeur représentative de la corrélation (Ci) avec l'imagette référence correspondante,

   c) calculer pour l'image test (I) un score de comparaison S(I,J) avec l'image référence (J), ce score étant fonction de la ou des grandeurs représentatives de la corrélation ($C_i$) et de la ou des mesures de qualité ($Q_j^{(b)}$) déterminées en appliquant un modèle à apprentissage statistique, et dans lequel ledit score de comparaison a pour expression :

$$S(I,J) = \frac{\sum \dfrac{F_R(I,J,Q) - \mu_R}{\sigma_R}}{4}$$

   où

$$F_R(C_1(W_R), C_2(W_R), h(Q_{j,}^{(b)}, Q_j^{(a)})) = \frac{Moyenne_{W_R}(h(Q_{j,}^{(b)}, Q_j^{(a)}) * C_1(W_R))}{std_{W_R}(h(Q_{j,}^{(b)}, Q_j^{(a)}) * C_2(W_R))}$$

avec

$$h(Q_{j,}^{(b)}, Q_j^{(a)}) = \begin{cases} 0 \quad si \quad \min(Q_{j,}^{(b)}, Q_j^{(a)}) < G \\ \min(Q_{j,}^{(b)}, Q_j^{(a)}) \end{cases}$$

où $W_R$ représente une comparaison entre une imagette test et une imagette référence filtrée par l'analyse de Gabor à une résolution R donnée, $C_1(W_R)$, $C_2(W_R)$ représentent respectivement la valeur du maximum de corrélation et sa position lors de la comparaison $W_R$ ; $Q_j^{(b)}$ et $Q_j^{(a)}$ représentent respectivement les valeurs d'une mesure de qualité calculées sur une imagette test et l'imagette de référence correspondante et G une valeur de seuil prédéfinie.

2. Procédé selon la revendication 1, dans lequel la ou les grandeurs représentatives de la corrélation sont calculées à partir d'une corrélation normalisée entre une imagette test et une imagette référence, ou leurs représentations respectives, par au moins une transformation mathématique.

3. Procédé selon la revendication 2, la transformation mathématique étant une analyse multirésolution effectuée par l'utilisation de filtres de Gabor bidimensionnels et par l'extraction de la phase de Gabor 2D.

4. Procédé selon l'une quelconque des revendications précédentes, l'une au moins des mesures de qualité étant déterminée en appliquant un modèle à apprentissage statistique de type Modèles de Markov Cachés (HMM).

5. Procédé selon l'une quelconque des revendications 1 à 4, l'une au moins des mesures de qualité étant déterminée en appliquant un modèle à apprentissage statistique de type Modèle à Mixture de Gaussiennes (GMM).

6. Procédé selon les revendications précédentes, l'image ou les images de référence et l'image ou les images test étant des données biométriques dont la richesse et la qualité de l'information utile au traitement ne sont pas uniformes.

7. Procédé selon l'une quelconque des revendications précédentes, l'image ou les images référence et l'image ou les images test étant directement acquises par un capteur quelconque ou étant extraites d'une séquence vidéo.

8. Procédé selon l'une quelconque des revendications précédentes, l'image référence et l'image test provenant d'images de l'iris.

9. Procédé selon l'une quelconque des revendications précédentes, dans lequel une mesure de qualité déterminée en appliquant un modèle à apprentissage statistique ($Q_j^{(a)}$, $Q_j^{(b)}$) est représentative d'une quantité de bruit d'occultation dans l'imagette.

10. Procédé selon l'une quelconque des revendications 1 à 8, dans lequel une mesure de qualité déterminée en appliquant un modèle à apprentissage statistique ($Q_j^{(a)}$, $Q_j^{(b)}$) est représentative d'une quantité de flou.

11. Procédé selon l'une quelconque des revendications précédentes, dans lequel chaque imagette test a une largeur comprise entre 11 et 111 pixels et une hauteur comprise entre 7 et 21 pixels et l'imagette référence correspondante a une largeur comprise entre 31 et 131 pixels et une hauteur comprise entre 11 et 25 pixels.

12. Procédé selon l'une quelconque des revendications précédentes, dans lequel les imagettes pour lesquelles une grandeur représentative de la corrélation est calculée sont sélectionnées parmi la pluralité d'imagettes en comparant une ou plusieurs mesures de qualité à des seuils prédéfinis.

13. Procédé de reconnaissance d'un individu, comportant les étapes consistant à :

- acquérir au moins une première image d'une biométrie de cet individu,
- générer à partir de cette image une pluralité d'imagettes,
- acquérir au moins une deuxième image de l'individu,
- générer en mettant en oeuvre le procédé selon l'une quelconque des revendications 1 à 12, une information représentative du degré de corrélation entre la ou les première image et la ou les deuxième image, et
- générer sur la base de cette information une décision relative à l'identité de l'individu.

**14.** Procédé de reconnaissance d'un individu, comportant les étapes consistant à:

- lire dans une mémoire ou sur un support des données représentatives d'une première image ou un identifiant renvoyant à ces données,
- acquérir au moins une deuxième image de l'individu,
- générer en mettant en oeuvre le procédé selon l'une quelconque des revendications 1 à 12 une information représentative du degré de corrélation entre la ou les premières images ou leur représentation par au moins une transformation mathématique et la ou les deuxièmes images ou leur présentation par une transformation mathématique, et
- générer sur la base de ces informations une décision relative à l'identité de l'individu.

**15.** Procédé selon la revendication précédente, dans laquelle les données représentatives sont des gabarits ayant pour format :

- la ou les premières images acquises en couleur et/ou en niveaux de gris ou représentées par des paramètres après au moins une transformation mathématique de l'image, ou
- la ou les images normalisées en couleur et/ou en niveau de gris ou représentées par des paramètres après au moins une transformation mathématique de l'image, ou
- un ensemble d'imagettes obtenues à partir de l'image acquise de l'image normalisée e couleur et/ou en niveau de gris ou représenté par des paramètres après au moins une transformation mathématique.

**16.** Procédé selon la revendication précédente, dans lequel les données représentatives comportent au moins une mesure de qualité déterminée par un modèle à apprentissage statistique et/ ou un sous-ensemble d'imagettes sélectionnées selon au moins une mesure de qualité déterminée en appliquant un modèle à apprentissage statistique associée à chacune de ces imagettes.

**17.** Système d'identification d'un individu configuré pour effectuer une comparaison d'images biométriques entre une image de référence et une image test dont on cherche à évaluer un degré de corrélation avec l'image référence, le système comportant:

- un système d'acquisition de l'image test et de l'image référence, notamment une caméra couplée à une lumière proche infrarouge,
- une unité informatique agencée pour :

a) générer à partir de l'image test et de l'image référence une pluralité de paires d'imagettes test et référence,
b) calculer pour chaque imagette :

- au moins une mesure de qualité déterminée en appliquant un modèle à apprentissage statistique, associée à cette imagette, y compris à sa représentation par au moins une transformation mathématique,
- au moins une grandeur représentative de la corrélation avec l'image référence ou une sous image de cette dernière y compris à leur représentation respective par au moins une transformation mathématique,

c) calculer pour l'image test un score de comparaison avec l'image référence, ce score étant fonction de la ou des grandeurs représentatives de la corrélation et de la ou des mesures de qualité déterminée en appliquant un modèle à apprentissage statistique, ledit score de comparaison ayant pour expression :

$$S(I,J) = \cfrac{\sum \cfrac{F_R(I,J,Q) - \mu_R}{\sigma_R}}{4}$$

où

$$F_R(C_1(W_R), C_2(W_R), h(Q_{j,}^{(b)}, Q_j^{(a)})) = \frac{Moyenne_{W_R}(h(Q_{j,}^{(b)}, Q_j^{(a)}) * C_1(W_R))}{std_{W_R}(h(Q_{j,}^{(b)}, Q_j^{(a)}) * C_2(W_R))}$$

avec

$$h(Q_{j,}^{(b)}, Q_j^{(a)}) = \begin{cases} 0 & si \quad min(Q_{j,}^{(b)}, Q_j^{(a)}) < G \\ min(Q_{j,}^{(b)}, Q_j^{(a)}) \end{cases}$$

où $W_R$ représente une comparaison entre une imagette test et une imagette référence filtrée par l'analyse de Gabor à une résolution R donnée, $C_1(W_R)$, $C_2(W_R)$ représentent respectivement la valeur du maximum de corrélation et sa position lors de la comparaison $W_R$ ; $Q_j^{(b)}$ et $Q_j^{(a)}$ représentent respectivement les valeurs d'une mesure de qualité calculées sur une imagette test et l'imagette de référence correspondante et G une valeur de seuil prédéfinie.

18. Système d'identification d'un individu effectuant la comparaison d'images biométriques entre une image référence et une image test dont on cherche à évaluer un degré de corrélation avec une image de référence, le système :

- comportant une mémoire dans laquelle sont enregistrées des données représentatives de gabarits des images test et référence, ou
- étant agencé pour accéder à une mémoire dans laquelle sont enregistrées des données représentatives de gabarits des images test et référence,

le système comportant une unité informatique agencée pour :

a) calculer pour chaque gabarit :

- au moins une mesure de qualité déterminée en appliquant un modèle à apprentissage statistique associée au gabarit,
- au moins une grandeur représentative de la corrélation entre le gabarit associé à l'image test et le gabarit associé à l'image référence,

b) calculer pour l'image test un score de comparaison avec l'image référence, ce score étant fonction de la ou des grandeurs représentatives de la corrélation et de la ou des mesures de qualité déterminée en appliquant un modèle à apprentissage statistique, ledit score de comparaison ayant pour expression :

$$S(I,J) = \cfrac{\sum \cfrac{F_R(I,J,Q) - \mu_R}{\sigma_R}}{4}$$

où

$$F_R(C_1(W_R), C_2(W_R), h(Q_{j.}^{(b)}, Q_j^{(a)})) = \frac{Moyenne_{W_R}(h(Q_{j.}^{(b)}, Q_j^{(a)}) * C_1(W_R))}{std_{W_R}(h(Q_{j.}^{(b)}, Q_j^{(a)}) * C_2(W_R))}$$

avec

$$h(Q_{j.}^{(b)}, Q_j^{(a)}) = \begin{cases} 0 & si & \min(Q_{j.}^{(b)}, Q_j^{(a)}) < G \\ \\ \overline{\min(Q_{j.}^{(b)}, Q_j^{(a)})} \end{cases}$$

où $W_R$ représente une comparaison entre une imagette test et une imagette référence filtrée par l'analyse de Gabor à une résolution R donnée, $C_1(W_R)$, $C_2(W_R)$ représentent respectivement la valeur du maximum de corrélation et sa position lors de la comparaison $W_R$ ; $Q_j^{(b)}$ et $Q_j^{(a)}$ représentent respectivement les valeurs d'une mesure de qualité calculées sur une imagette test et l'imagette de référence correspondante et G une valeur de seuil prédéfinie.

**19.** Système selon l'une des deux revendications immédiatement précédentes, étant intégré à un appareil électronique tel qu'un ordinateur, un ordinateur personnel, un téléphone portable, un assistant personnel numérique, un terminal nomade à usage professionnel ou à usage personnel, une serrure électronique ou un portail d'accès à une zone sécurisée, un équipement professionnel ou industriel.

**20.** Produit programme d'ordinateur comportant des instructions lisibles par une unité informatique afin de permettre une comparaison d'images entre au moins une image référence et au moins une image test dont on cherche à évaluer un degré de corrélation avec l'image de référence, ces instructions commandant le fonctionnement de l'unité informatique de manière à :

a) accéder à une ou plusieurs mémoire(s) dans laquelle/lesquelles sont enregistrées des données représentatives d'une ou plusieurs images référence,
b) générer des imagettes test à partir de l'image ou les images test ou accéder à une mémoire dans laquelle sont enregistrées des données représentatives d'au moins une image test,
c) calculer pour chaque imagette test :

- au moins une mesure de qualité déterminée en appliquant un modèle à apprentissage statistique associée à cette imagette ou à sa représentation par au moins une transformation mathématique,
- au moins une grandeur représentative de la corrélation entre l'imagette test et l'imagette référence correspondante ou entre leur représentation respective par ladite transformation mathématique,

d) calculer pour l'image test (I) un score de comparaison S(I,J) avec l'image référence (J), ce score étant fonctions de la ou des grandeurs représentatives de la corrélation (C) et de la ou des mesures de qualité déterminée en appliquant un modèle à apprentissage statistique ($Q_j^{(a)}$, $Q_j^{(b)}$), ledit score de comparaison ayant pour expression :

$$S(I,J) = \frac{\sum \dfrac{F_R(I,J,Q) - \mu_R}{\sigma_R}}{4}$$

où

$$F_R(C_1(W_R), C_2(W_R), h(Q_{j.}^{(b)}, Q_j^{(a)})) = \frac{Moyenne_{W_R}(h(Q_{j.}^{(b)}, Q_j^{(a)}) * C_1(W_R))}{std_{W_R}(h(Q_{j.}^{(b)}, Q_j^{(a)}) * C_2(W_R))}$$

avec

$$h(Q_{j,}{}^{(b)}, Q_j{}^{(a)}) = \begin{cases} 0 & si & \min(Q_{j,}{}^{(b)}, Q_j{}^{(a)}) < G \\ \dfrac{}{\min(Q_{j,}{}^{(b)}, Q_j{}^{(a)})} \end{cases}$$

où $W_R$ représente une comparaison entre une imagette test et une imagette référence filtrée par l'analyse de Gabor à une résolution R donnée, $C_1(W_R)$, $C_2(W_R)$ représentent respectivement la valeur du maximum de corrélation et sa position lors de la comparaison $W_R$; $Q_j^{(b)}$ et $Q_j^{(a)}$ représentent respectivement les valeurs d'une mesure de qualité calculées sur une imagette test et l'imagette de référence correspondante et G une valeur de seuil prédéfinie.

**Claims**

1. A process for comparing at least one test image with at least one reference image, comprising the following steps:

   a) generating a plurality of pairs of test and reference sub-images from the test image (I) and reference image (J),
   b) calculating for each test sub-image:

   - at least one quality measurement ($Q_j^{(b)}$) determined by applying a statistical learning model associated with said test sub-image,
   - at least one value representative of the correlation ($C_i$) with the corresponding reference sub-image,

   c) calculating for the test image (I) a comparison score S(I, J) with the reference image (J), said score being a function of the one or more values representative of the correlation ($C_i$) and of the quality measurement(s) ($Q_j^{(b)}$) determined by applying a statistical learning model,
   and wherein said comparison score is expressed as follows:

$$S(I,J) = \frac{\sum \dfrac{F_R(I,J,Q) - \mu_R}{\sigma_R}}{4}$$

where

$$F_R\,(C_I(W_R),\ C_2(W_R),\ h(Q_j{}^{(b)},\ Q_j{}^{(a)})) = \frac{Mean_{W_R}(h(Q_{j,}{}^{(b)}, Q_j{}^{(a)}) * C_i(W_R))}{std_{W_R}(h(Q_{j,}{}^{(b)}, Q_j{}^{(a)}) * C_2(W_R))}$$

with

$$h(Q_j{}^{(b)},\ Q_j{}^{(a)}) = \begin{cases} 0 & if & \min(Q_{j,}{}^{(b)}, Q_j{}^{(a)}) < G \\ \dfrac{}{\min(Q_{j,}{}^{(b)}, Q_j{}^{(a)})} \end{cases}$$

where $W_R$ represents a comparison between a test sub-image and a reference sub-image filtered by way of a Gabor analysis at a given resolution R, $C_1(W_R)$, $C_2(W_R)$ respectively representing the maximum correlation value and its position during the comparison $W_R$; wherein $Q_j^{(b)}$ and $Q_j^{(a)}$ respectively represent the values of a quality measurement calculated on a test sub-image and the corresponding reference sub-image and G is a predefined threshold value.

2. The process according to claim 1, wherein the value(s) representative of the correlation is/are calculated from a correlation which is normalised between a test sub-image and a reference sub-image, or their respective representations, via at least one mathematical transformation.

3. The process according to claim 2, wherein the mathematical transformation is a multi-resolution analysis completed by the use of two-dimensional Gabor filters and by the extraction of the 2D Gabor phase.

4. The process according to any one of the preceding claims, wherein at least one of the quality measurements is determined by applying a statistical learning model of the Hidden Markov Model (HMM) type.

5. The process according to any one of claims 1 to 4, wherein at least one of the quality measurements is determined by applying a statistical learning model of the Gaussian Mixture Model (GMM) type.

6. The process according to the preceding claims, wherein the reference image(s) or the test image(s) is/are biometric data in which the content and the quality of the information which is useful for processing is not uniform.

7. The process according to any one of the preceding claims, wherein the reference image(s) or the test image(s) is/are acquired directly by any sensor or is/are extracted from a video sequence.

8. The process according to any one of the preceding claims, wherein the reference image and the test image originate from iris images.

9. The process according to any one of the preceding claims, wherein a quality measurement determined by applying a statistical learning model ($Q_j^{(a)}$, $Q_j^{(b)}$) is representative of a quantity of occultation noise in the sub-image.

10. The process according to any one of claims 1 to 8, wherein a quality measurement determined by applying a statistical learning model ($Q_j^{(a)}$, $Q_j^{(b)}$) is representative of an amount of blur.

11. The process according to any one of the preceding claims, wherein the width of each test sub-image is between 11 and 111 pixels and the height of each test sub-image is between 7 and 21 pixels and the width and the height of the corresponding reference sub-image is between 31 and 131 pixels and 11 and 25 pixels respectively.

12. The process according to any one of the preceding claims, wherein the sub-images, for which a value representative of the correlation is calculated, are selected from the plurality of sub-images by comparing one or more quality measurements with predefined thresholds.

13. A process for recognising an individual, comprising the following steps:

   - acquiring at least one first image of a biometry of said individual,
   - generating a plurality of sub-images from said image,
   - acquiring at least one second image of the individual,
   - generating, by implementing the process according to any one of claims 1 to 12, information representative of the level of correlation between the first image(s) and the second image(s), and
   - generating, based on said information, a decision pertaining to the identity of the individual.

14. A process for recognising an individual, comprising the following steps:

   - reading from a memory or a support data representative of a first image or from an identifier referring to said data,
   - acquiring at least one second image of the individual,
   - generating, by implementing the process according to any one of claims 1 to 12, information representative of the level of correlation between the first image(s) or its/their representation by at least one mathematical transformation and the second image(s) or its/their presentation by a mathematical transformation, and
   - generating, based on said information, a decision pertaining to the identity of the individual.

15. The process according to the preceding claim, wherein the representative data are templates, using as a format:

   - the first image(s) acquired in colour and/or in grey levels or represented by parameters after at least one mathematical transformation of the image, or
   - the normalised image(s) in colour and/or in grey levels or represented by parameters after at least one mathematical transformation of the image, or

- a set of sub-images obtained from the image acquired from the normalised image in colour and/or in grey levels represented by parameters after at least one mathematical transformation.

16. The process according to the preceding claim, wherein the representative data comprises at least one quality measurement determined by a statistical learning model and/or a sub-set of sub-images selected according to at least one quality measurement determined by applying a statistical learning model associated with each of these sub-images.

17. A system for identifying an individual configured to perform a comparison of biometric images between a reference image and a test image, wherein a level of correlation is assessed with the reference image, the system comprising:

- a system for acquiring the test image and the reference image, notably a camera coupled to a near-infrared light,
- a data processing unit arranged for:

a) generating a plurality of pairs of test and reference sub-images from the test image and the reference image,
b) calculating for each sub-image:

- at least one quality measurement determined by applying a statistical learning model associated with said sub-image, including its representation by at least one mathematical transformation,
- at least one value representative of the correlation with the reference image or a sub-image of said image including its respective representation by at least one mathematical transformation,

c) calculating for the test image a comparison score with the reference image, said score being a function of the representative value(s) of the correlation and the quality measurement(s) determined by applying a statistical learning model, said comparison score being expressed as:

$$S(I,J) = \frac{\sum \frac{F_R(I,J,Q) - \mu_R}{\sigma_R}}{4}$$

where

$$F_R\left(C_1(W_R),\, C_2(W_R),\, h(Q_j^{(b)},\, Q_j^{(a)})\right) = \frac{Mean_{W_R}\left(h(Q_{j,}^{(b)}, Q_j^{(a)}) * C_1(W_R)\right)}{std_{W_R}\left(h(Q_{j,}^{(b)}, Q_j^{(a)}) * C_2(W_R)\right)}$$

with

$$h(Q_j^{(b)},\, Q_j^{(a)}) = \begin{cases} 0 & if \quad \min(Q_{j,}^{(b)}, Q_j^{(a)}) < G \\ \min(Q_{j,}^{(b)}, Q_j^{(a)}) \end{cases}$$

where $W_R$ represents a comparison between a test sub-image and a reference sub-image filtered by way of a Gabor analysis at a given resolution R, $C_1(W_R)$, $C_2(W_R)$ respectively representing the maximum correlation value and its position during the comparison $W_R$; wherein $Q_j^{(b)}$ and $Q_j^{(a)}$ respectively represent the values of a quality measurement calculated on a test sub-image and the corresponding reference sub-image and G is a predefined threshold value.

18. The system for identifying an individual by performing a comparison of biometric images between a reference image and a test image wherein a level of correlation with the reference image is assessed, the system:

- comprising a memory having recorded thereon data representing the templates of the test and reference images, or

- being arranged to access a memory having recorded thereon data representing the templates of the test and reference images, the system comprising a data processing unit arranged to:

a) calculate for each template:

- at least one quality measurement determined by applying a statistical learning model associated with the template,
- at least one value representative of the correlation between the template associated with the test image and the template associated with the reference image,

b) calculate for the test image a comparison score with the reference image, said score being a function of the representative value(s) of the correlation and the quality measurement(s) determined by applying a statistical learning model, said comparison score being expressed as:

$$S(I,J) = \frac{\sum \frac{F_R(I,J,Q) - \mu_R}{\sigma_R}}{4}$$

where

$$F_R(C_1(W_R), C_2(W_R), h(Q_j^{(b)}, Q_j^{(a)})) = \frac{Mean_{W_R}(h(Q_{j,}^{(b)}, Q_j^{(a)}) * C_1(W_R))}{std_{W_R}(h(Q_{j,}^{(b)}, Q_j^{(a)}) * C_2(W_R))}$$

with

$$h(Q_j^{(b)}, Q_j^{(a)}) = \begin{cases} 0 & if \quad \min(Q_{j,}^{(b)}, Q_j^{(a)}) < G \\ \min(Q_{j,}^{(b)}, Q_j^{(a)}) \end{cases}$$

where $W_R$ represents a comparison between a test sub-image and a reference sub-image filtered by way of a Gabor analysis at a given resolution R, $C_1(W_R)$, $C_2(W_R)$ respectively representing the maximum correlation value and its position during the comparison $W_R$; wherein $Q_j^{(b)}$ and $Q_j^{(a)}$ respectively represent the values of a quality measurement calculated on a test sub-image and the corresponding reference sub-image and G is a predefined threshold value.

**19.** The system according to one of the two directly preceding claims integrated into an electronic device, such as a computer, a personal computer, a mobile telephone, a personal digital assistant, a mobile terminal for professional or personal use, an electronic lock or a secure zone access gate or an item of professional or industrial equipment.

**20.** A computer programme product, comprising instructions that can be read by a data processing unit so as to permit a comparison of images between at least one reference image and at least one test image, wherein a level of correlation is assessed with the reference image, said instructions controlling the operation of the data processing unit so as to:

a) access one or more memories in which the data representing one or more reference images is recorded,
b) generate test sub-images from the test image(s) or access a memory in which data representative of at least one test image is recorded,
c) calculate for each test image:

- at least one quality measurement determined by applying a statistic learning model associated with said sub-image or its representation by at least one mathematical transformation,
- at least one value representative of the correlation between the test sub-image and the corresponding reference sub-image or between their respective representation by said mathematical transformation,

d) calculate for the test image (I) a comparison score S(I, J) with the reference image (J), said score being a function of the one or more values representative of the correlation (C) and of the quality measurement(s) ($Q_j^{(a)}$, $Q_j^{(b)}$) determined by applying a statistical learning model, said comparison score being expressed as follows:

$$ S(I,J) = \frac{\sum \frac{F_R(I,J,Q) - \mu_R}{\sigma_R}}{4} $$

where

$$ F_R\left(C_1(W_R),\ C_2(W_R),\ h(Q_j^{(b)}, Q_j^{(a)})\right) = \frac{Mean_{W_R}\left(h(Q_{j.}^{(b)}, Q_j^{(a)}) * C_1(W_R)\right)}{std_{W_R}\left(h(Q_{j.}^{(b)}, Q_j^{(a)}) * C_2(W_R)\right)} $$

with

$$ h(Q_j^{(b)}, Q_j^{(a)}) = \begin{cases} 0 & if \quad \min(Q_{j.}^{(b)}, Q_j^{(a)}) < G \\ \min(Q_{j.}^{(b)}, Q_j^{(a)}) \end{cases} $$

where $W_R$ represents a comparison between a test sub-image and a reference sub-image filtered by a Gabor analysis at a given resolution R, $C_1(W_R)$, $C_2(W_R)$ respectively representing the maximum correlation value and its position during the comparison $W_R$; $Q_j^{(b)}$ and $Q_j^{(a)}$ respectively representing the values of a quality measurement calculated on a test sub-image and the corresponding reference image and G is a predefined threshold value.

## Patentansprüche

1. Verfahren zum Vergleichen von wenigstens einem Testbild mit wenigstens einem Referenzbild, das die folgenden Schritte beinhaltet:

a) Erzeugen mehrerer Paare von Test- und Referenzsubbildern von dem Testbild (I) und dem Referenzbild (J),
b) Berechnen für jedes Testsubbild:

- wenigstens eines Qualitätsmesswertes ($Q_j^{(b)}$), ermittelt durch Anwenden eines statistischen Lernmodells in Verbindung mit diesem Testsubbild,
- wenigstens eines Wertes, der für die Korrelation ($C_i$) mit dem entsprechenden Referenzsubbild repräsentativ ist,

c) Berechnen, für das Testbild (I), einer Wertung des Vergleichs S(I, J) mit dem Referenzbild (J), wobei diese Wertung von den ein oder mehreren Werten abhängig ist, die für die Korrelation ($C_i$) und den/die durch Anwenden eines statistischen Lernmodells ermittelten Qualitätsmesswert(e) ($Q_j^{(b)}$) abhängig ist, und wobei die Vergleichswertung wie folgt ausgedrückt wird:

$$S(I,J) = \frac{\sum \dfrac{F_R(I,J,Q) - \mu_R}{\sigma_R}}{4}$$

wobei

$$F_R\left(C_1(W_R),\ C_2(W_R),\ h(Q_j^{(b)},\ Q_j^{(a)})\right) = \frac{Mittel_{W_R}\left(h(Q_j^{(b)},Q_j^{(a)}) * C_1(W_R)\right)}{std_{W_R}\left(h(Q_j^{(b)},Q_j^{(a)}) * C_2(W_R)\right)}$$

mit

$$h(Q_j^{(b)},\ Q_j^{(a)}) = \begin{cases} 0 \ wenn \ \min(Q_j^{(b)},Q_j^{(a)}) < G \\ \min(Q_j^{(b)},Q_j^{(a)}) \end{cases}$$

wobei $W_R$ einen Vergleich zwischen einem Testsubbild und einem Referenzsubbild repräsentiert, gefiltert mittels einer Gabor-Analyse mit einer gegebenen Auflösung R, wobei $C_1(W_R)$, $C_2(W_R)$ jeweils den maximalen Korrelationswert und seine Position während des Vergleichs $W_R$ repräsentiert; wobei $Q_j^{(b)}$ und $Q_j^{(a)}$ jeweils die Werte einer Qualitätsmessung repräsentieren, die an einem Testsubbild und dem entsprechenden Referenzsubbild berechnet wurden, und G ein vordefinierter Schwellenwert ist.

2. Verfahren nach Anspruch 1, wobei der/die für die Korrelation repräsentative(n) Wert(e) von einer Korrelation berechnet wird/werden, die zwischen einem Testsubbild und einem Referenzsubbild oder deren jeweiligen Repräsentationen standardisiert ist, über wenigstens eine mathematische Transformation.

3. Verfahren nach Anspruch 2, wobei die mathematische Transformation eine Mehrauflösungsanalyse ist, die durch die Verwendung von zweidimensionalen Gabor-Filtern und durch die Extraktion der 2D-Gabor-Phase bewirkt wird.

4. Verfahren nach einem der vorherigen Ansprüche, wobei wenigstens einer der Qualitätsmesswerte durch Anwenden eines statistischen Lernmodells des HMM-(Hidden Markov Model)-Typs ermittelt wird.

5. Verfahren nach einem der Ansprüche 1 bis 4, wobei wenigstens einer der Qualitätsmesswerte durch Anwenden eines statistischen Lernmodells des GMM-(Gaussian Mixture Model)-Typs ermittelt wird.

6. Verfahren nach den vorherigen Ansprüchen, wobei das oder die Referenzbild(er) und das oder die Testbild(er) biometrische Daten sind, in denen Inhalt und Qualität der für die Verarbeitung nützlichen Informationen nicht gleichförmig sind.

7. Verfahren nach einem der vorherigen Ansprüche, wobei das oder die Referenzbild(er) und das oder die Testbild(er) direkt von irgendeinem Sensor erfasst oder von einer Videosequenz extrahiert werden.

8. Verfahren nach einem der vorherigen Ansprüche, wobei das Referenzbild und das Testbild von Irisbildern stammen.

9. Verfahren nach einem der vorherigen Ansprüche, wobei ein durch Anwenden eines statistischen Lernmodells ($Q_j^{(a)}$, $Q_j^{(b)}$) ermittelter Qualitätsmesswert für einen Betrag an Verdeckungsrauschen in dem Subbild repräsentativ ist.

10. Verfahren nach einem der Ansprüche 1 bis 8, wobei ein durch Anwenden eines statistischen Lernmodells ($Q_j^{(a)}$, $Q_j^{(b)}$) ermittelter Qualitätsmesswert für einen Betrag an Unschärfe repräsentativ ist.

11. Verfahren nach einem der vorherigen Ansprüche, wobei die Breite jedes Testsubbildes zwischen 11 und 111 Pixeln und die Höhe jedes Testsubbildes zwischen 7 und 21 Pixeln und die Breite und die Höhe des entsprechenden Referenzsubbildes zwischen 31 und 131 Pixeln bzw. zwischen 11 und 25 Pixeln liegt.

**12.** Verfahren nach einem der vorherigen Ansprüche, wobei die Subbilder, für die ein für die Korrelation repräsentativer Wert berechnet wird, aus den mehreren Subbildern durch Vergleichen von einem oder mehreren Qualitätsmesswerten mit vordefinierten Schwellenwerten ausgewählt werden.

**13.** Verfahren zum Erkennen eines Individuums, das die folgenden Schritte beinhaltet:

- Erfassen wenigstens eines ersten Bildes einer Biometrie des Individuums,
- Erzeugen mehrerer Subbilder von diesem Bild,
- Erfassen wenigstens eines zweiten Bildes des Individuums,
- Erzeugen, durch Ausführen des Verfahrens nach einem der Ansprüche 1 bis 12, einer Information, die für das Maß an Korrelation zwischen dem/den ersten Bild(em) und dem/den zweiten Bild(em) repräsentativ ist, und
- Erzeugen, auf der Basis dieser Informationen, einer Entscheidung in Bezug auf die Identität des Individuums.

**14.** Verfahren zum Erkennen eines Individuums, das die folgenden Schritte beinhaltet:

- Lesen, aus einem Speicher oder von einem Träger, von Daten, die für ein erstes Bild repräsentativ sind, oder von einer auf diese Daten verweisenden Kennung,
- Erfassen wenigstens eines zweiten Bildes des Individuums,
- Erzeugen, durch Ausführen des Verfahrens nach einem der Ansprüche 1 bis 12, einer Information, die für das Maß an Korrelation zwischen dem/den ersten Bild(ern) oder dessen/deren Repräsentation repräsentativ sind, durch wenigstens eine mathematische Transformation, und dem/den zweiten Bild(ern) oder dessen/deren Darstellung durch eine mathematische Transformation, und
- Erzeugen, auf der Basis dieser Informationen, einer Entscheidung in Bezug auf die Identität des Individuums.

**15.** Verfahren nach dem vorherigen Anspruch, wobei die repräsentativen Daten Schablonen mit dem folgenden Format sind:

- das/die erste(n) Bild(er) erfasst in Farbe und/oder in Graustufen oder repäsentiert durch Parameter nach wenigstens einer mathematischen Transformation des Bildes, oder
- das/die normalisierte(n) Bild(er) in Farbe und/oder in Graustufen oder repräsentiert durch Parameter nach wenigstens einer mathematischen Transformation des Bildes, oder
- ein Satz von Subbildern, erhalten von dem Bild, das von dem normalisierten Bild in Farbe und/oder Graustufe erfasst oder durch Parameter nach wenigstens einer mathematischen Transformation repräsentiert wurde.

**16.** Verfahren nach einem der vorherigen Ansprüche, wobei die repräsentativen Daten wenigstens einen anhand eines statistischen Lernmodells ermittelten Qualitätsmesswert und/oder eine Teilmenge von Subbildern umfassen, die gemäß wenigstens einem Qualitätsmesswert ausgewählt wurden, der durch Anwenden eines statistischen Lernmodells jeweils in Verbindung mit jedem dieser Subbilder ermittelt wurde.

**17.** System zum Identifizieren eines Individuums, konfiguriert zum Ausführen eines Vergleichs von biometrischen Bildern zwischen einem Referenzbild und einem Testbild, wobei ein Maß an Korrelation mit dem Referenzbild beurteilt wird, wobei das System Folgendes umfasst:

- ein System zum Erfassen des Testbildes und des Referenzbildes, insbesondere eine Kamera, die mit einem Nahe-Infrarotlicht gekoppelt ist,
- eine Datenverarbeitungseinheit zum:

a) Erzeugen mehrerer Paare von Test- und Referenzsubbildern von dem Testbild und dem Referenzbild,
b) Berechnen für jedes Subbild:

- wenigstens eines Qualitätsmesswertes, ermittelt durch Anwenden eines statistischen Lernmodells in Verbindung mit diesem Subbild, inklusive seiner Repräsentation, durch wenigstens eine mathematische Transformation,
- wenigstens einen Wert, der für die Korrelation mit dem Referenzbild oder einem Subbild des Bildes repräsentativ ist, inklusive seiner jeweiligen Repräsentation, durch wenigstens eine mathematische Transformation,

c) Berechnen, für das Testbild, einer Wertung des Vergleichs mit dem Referenzbild, wobei diese Wertung von dem/den repräsentativen Wert(en) der Korrelation und dem/den durch Anwenden eines statistischen Lernmodells ermittelten Qualitätsmesswert(en) abhängig ist, wobei die Vergleichswertung ausgedrückt wird als:

$$S(I,J) = \frac{\sum \frac{F_R(I,J,Q) - \mu_R}{\sigma_R}}{4}$$

wobei

$$F_R(C_1(W_R), C_2(W_R), h(Q_j^{(b)}, Q_j^{(a)})) = \frac{Mittel_{W_R}(h(Q_{j,}^{(b)}, Q_j^{(a)}) * C_1(W_R))}{std_{W_R}(h(Q_{j,}^{(b)}, Q_j^{(a)}) * C_2(W_R))}$$

mit

$$h(Q_j^{(b)}, Q_j^{(a)}) = \begin{cases} 0 \; wenn \min(Q_{j,}^{(b)}, Q_j^{(a)}) < G \\ \min(Q_{j,}^{(b)}, Q_j^{(a)}) \end{cases}$$

wobei $W_R$ einen Vergleich zwischen einem Testsubbild und einem Referenzsubbild repräsentiert, gefiltert mittels einer Gabor-Analyse mit einer gegebenen Auflösung R, wobei $C_1(W_R)$, $C_2(W_R)$ jeweils den maximalen Korrelationswert und seine Position während des Vergleichs $W_R$ repräsentiert; wobei $Q_j^{(b)}$ und $Q_j^{(a)}$ jeweils die Werte einer Qualitätsmessung repräsentieren, die an einem Testsubbild und dem entsprechenden Referenzsubbild berechnet wurden, und G ein vordefinierter Schwellenwert ist.

18. System zum Identifizieren eines Individuums mit Hilfe eines Vergleichs von biometrischen Bildern zwischen einem Referenzbild und einem Testbild, wobei ein Maß an Korrelation mit dem Referenzbild beurteilt wird, wobei das System:

- einen Speicher umfasst, in dem die Daten aufgezeichnet sind, die für die Schablonen der Test- und Referenzbilder repräsentativ sind, oder
- so ausgelegt ist, dass es auf einen Speicher zugreift, in dem Daten aufgezeichnet sind, die für die Schablonen der Test- und Referenzbilder repräsentativ sind;
wobei das System eine Datenverarbeitungseinheit umfasst zum:

a) Berechnen für jede Schablone:

- wenigstens eines Qualitätsmesswertes, ermittelt durch Anwenden eines statistischen Lernmodells in Bezug auf die Schablone,
- wenigstens einen Wert, der für die Korrelation zwischen der Schablone in Verbindung mit dem Testbild und der Schablone in Verbindung mit dem Referenzbild repräsentativ ist,

b) Berechnen, für das Testbild, einer Wertung des Vergleichs mit dem Referenzbild, wobei diese Wertung von dem/den repräsentativen Wert(en) der Korrelation und dem/den durch Anwenden eines statistischen Lernmodells ermittelten Qualitätsmesswert(en) abhängig ist, wobei die Vergleichswertung ausgedrückt wird als:

$$S(I,J) = \frac{\sum \frac{F_R(I,J,Q) - \mu_R}{\sigma_R}}{4}$$

wobei

$$F_R\left(C_1(W_R),\ C_2(W_R),\ h(Q_j^{(b)},\ Q_j^{(a)})\right) \approx \frac{Mittel_{W_R}\left(h(Q_j^{(b)},Q_j^{(a)}) * C_1(W_R)\right)}{std_{W_R}\left(h(Q_j^{(b)},Q_j^{(a)}) * C_2(W_R)\right)}$$

mit

$$h(Q_j^{(b)},\ Q_j^{(a)}) = \begin{cases} 0 & wenn\ \min(Q_j^{(b)},Q_j^{(a)}) < G \\ \min(Q_j^{(b)},Q_j^{(a)}) \end{cases}$$

wobei $W_R$ einen Vergleich zwischen einem Testsubbild und einem Referenzsubbild repräsentiert, gefiltert mittels einer Gabor-Analyse mit einer gegebenen Auflösung R, wobei $C_1(W_R)$, $C_2(W_R)$ jeweils den maximalen Korrelationswert und seine Position während des Vergleichs $W_R$ repräsentiert; wobei $Q_j^{(b)}$ und $Q_j^{(a)}$ jeweils die Werte einer Qualitätsmessung repräsentieren, die an einem Testsubbild und dem entsprechenden Referenzsubbild berechnet wurden, und G ein vordefinierter Schwellenwert ist.

19. System nach einem der beiden unmittelbar vorangehenden Ansprüche, das in ein elektronisches Gerät wie z.B. einen Computer, einen PC, ein Mobiltelefon, einen Personal Digital Assistant, ein mobiles Endgerät für die professionelle oder persönliche Verwendung, ein elektronisches Schloss oder ein Sicherheitszonenzugangstor oder ein professionelles oder industrielles Ausrüstungsteil integriert ist.

20. Computerprogrammprodukt, das Befehle umfasst, die von einer Datenverarbeitungseinheit gelesen werden können, so dass Bilder zwischen wenigstens einem Referenzbild und wenigstens einem Testbild verglichen werden können, wobei ein Maß an Korrelation mit dem Referenzbild ermittelt wird, wobei diese Befehle den Betrieb der Datenverarbeitungseinheit steuern, um:

a) auf einen oder mehrere Speicher zuzugreifen, in denen Daten aufgezeichnet sind, die für ein oder mehrere Referenzbilder repräsentativ sind,
b) Testsubbilder von dem Bild oder den Testbildern zu erzeugen oder auf einen Speicher zuzugreifen, in dem Daten aufgezeichnet sind, die für wenigstens ein Testbild repräsentativ sind,
c) Berechnen für jedes Testsubbild:

- wenigstens eines Qualitätsmesswertes, ermittelt durch Anwenden eines statistischen Lernmodells in Verbindung mit diesem Subbild oder seiner Repräsentation durch wenigstens eine mathematische Transformation,
- wenigstens eines Wertes, der für die Korrelation zwischen dem Testsubbild und dem entsprechenden Referenzsubbild oder zwischen ihrer jeweiligen Repräsentation durch die genannte mathematische Transformation repräsentativ sind,

d) Berechnen, für das Testbild (I), einer Wertung des Vergleichs S(I, J) mit dem Referenzbild (J), wobei diese Wertung von einem oder mehreren Werten abhängig ist, die für die Korrelation (C) und den/die durch Anwenden eines statistischen Lernmodells ermittelten Qualitätsmesswert(e) ($Q_j^{(a)}$, $Q_j^{(b)}$) repräsentativ sind, wobei die Vergleichswertung wie folgt ausgedrückt wird:

$$S(I,J) = \frac{\sum \frac{F_R(I,J,Q) - \mu_R}{\sigma_R}}{4}$$

wobei

$$F_R\left(C_1(W_R),\ C_2(W_R),\ h(Q_j^{(b)},\ Q_j^{(a)})\right) \cong \frac{Mittel_{W_R}\left(h(Q_{j.}^{(b)},Q_j^{(a)}) * C_1(W_R)\right)}{std_{W_R}\left(h(Q_{j.}^{(b)},Q_j^{(a)}) * C_2(W_R)\right)}$$

mit

$$h(Q_j^{(b)},\ Q_j^{(a)}) \cong \begin{cases} 0\ wenn\ min(Q_{j.}^{(b)},Q_j^{(a)}) < G \\ \dfrac{}{min(Q_{j.}^{(b)},Q_j^{(a)})} \end{cases}$$

wobei $W_R$ einen Vergleich zwischen einem Testsubbild und einem Referenzsubbild repräsentiert, gefiltert mittels einer Gabor-Analyse mit einer gegebenen Auflösung R, wobei $C_1(W_R)$, $C_2(W_R)$ jeweils den maximalen Korrelationswert und seine Position während des Vergleichs $W_R$ repräsentiert; wobei $Q_j^{(b)}$ und $Q_j^{(a)}$ jeweils die Werte einer Qualitätsmessung repräsentieren, die an einem Testsubbild und dem entsprechenden Referenzsubbild berechnet wurden, und G ein vordefinierter Schwellenwert ist.

# Fig.1

Image test ( I )

100b

Q₁⁽ᵇ⁾ — 110b

Q₁

130b

FUSION ET PONDERATION — C₁(W) — Module Corrélation — 140

S( I,J )

150 — C₂(W)

120 — FUSION

130a

h(Q₁⁽ᵃ⁾,Q₁⁽ᵇ⁾)

Image référence ( J )

100a

Q₁⁽ᵃ⁾ — 110a

# Fig.2

Fig.3

Fig.4

Fig.5a

Fig.5b

Fig.9

40

Fig.8

10    20    30

Fig.10

Fig.6

Fig.7

## RÉFÉRENCES CITÉES DANS LA DESCRIPTION

**Documents brevets cités dans la description**

- US 4141349 A
- US 5291560 A
- US 5572596 A
- US 7031539 B

**Littérature non-brevet citée dans la description**

- **E. KRICHEN ; L. ALLANO ; S. GARCIA-SALICETTI ; B. DORIZZI.** *Specific texture analysis for iris recognition*
- Analyse de données. **M.Volle.** Economica. 1985
- **A. Hyvarinen ; J. Karhunen ; E. Oja.** Independent Component Analysis. John Wiley & Sons, 2001
- **KPCA ; KLDA ; KICA ; J. Shawe-Taylor ; N. Cristianini.** Kernel Methods for Pattern Analysis. Cambridge University Press, 2004
- **L.R Rabiner.** A tutorial on Hidden Markov Models and Selected Applications in Speech Recognition. *Proc. of IEEE,* Février 1989, vol. 77 (2
- **D.A. Reynolds ; C. Rose.** Robust Text-Independent Speaker Identification Using Gaussian Mixture Speaker Models. *IEEE Transactions on Speech and Audio Processing,* Janvier 1995, vol. 3 (1
- **Ross Kinderman ; Laurie Snell.** Markov Random Fields and Their Applications. AMS publications, 1990
- **J. Durand ; P. Gonçalves ; Y. Guédon.** Computational Methods for Hidden Markov Tree Models: An Application to Wavelet Trees. *IEEE Transactions on Signal Processing,* Septembre 2004, vol. 52 (9
- **S. Haykin.** Neural Networks : A Comprehensive Foundation. Prentice Hall International, 1999
- **Nello Cristianini ; John Shawe-Taylor.** An Introduction to Support Vector Machines and other Kernel-based Learning Methods. Cambridge University Press, 2000
- **Vladimir Vapnik.** The Nature of Statistical Learning Theory. Springer-Verlag, 1999
- **Ann Becker ; Patrick Naîm.** Les réseaux bayésiens. 1999
- **J.C. Russ.** The Image Processing Handbook. CRC Press, 2002
- Cours de probabilités. **A.Monfort.** Economica. 1980
- **J.P. Lewis.** *Fast Normalized Cross-correlation*